# EUROPEAN PATENT SPECIFICATION

(11) **EP 0 784 074 B1**
(45) Date of publication and mention of the grant of the patent: **07.07.1999**
(21) Application number: 95932938.4
(22) Date of filing: 29.09.1995
(51) Int. Cl.: C08L 23/10, C08L 53/00, C08K 3/00, C08K 5/00, B62D 29/04

(54) **PROPYLENE RESIN COMPOSITION FOR INTERIOR MATERIAL FOR AUTOMOBILES, AND INTERIOR MATERIAL FOR AUTOMOBILES**
PROPYLENHARZZUSAMMENSETZUNG FÜR DIE AUTOMOBILINNENAUSSTATTUNG SOWIE AUTOMOBILINNENAUSSTATTUNG
COMPOSITION DE RESINE DE PROPYLENE POUR MATERIAU D'INTERIEUR D'AUTOMOBILES ET MATERIAU D'INTERIEUR D'AUTOMOBILES

(30) Priority: 30.09.1994 JP 23719594
(43) Date of publication of application: 16.07.1997
(73) Proprietor: IDEMITSU PETROCHEMICAL CO., LTD., Tokyo 108-0014 (JP)
(72) Inventor: TOMOMATSU, Ryuzo Idemitsu Petrochemical Co., Ltd., Ichihara-shi Chiba-ken 299-01 (JP); JUNKE, Tadanori Idemitsu Petrochemical Co., Ltd., Ichihara-shi Chiba-ken 299-01 (JP); SHIMAZAKI,Toshifumi, Ichihara-shi Chiba-ken 299-01 (JP); MIZUNO, Hirohide Idemitsu Petrochemical Co., Ltd., Ichihara-shi Chiba-ken 299-01 (JP); KIJIMA, Masato Idemitsu Petrochemical Co., Ltd., Ichihara-shi Chiba-ken 299-01 (JP); IIDA, Makoto Idemitsu Petrochemical Co., Ltd., Ichihara-shi Chiba-ken 299-01 (JP)
(74) Representative: Türk, Gille, Hrabal
(86) International application number: JP9501987
(87) International publication number: WO9610607

(56) References cited:
- GB-A- 2 210 050
- JP-A- 3 059 039
- JP-A- 59 172 540

## Description

### Technical Field

The present invention relates to a propylene resin composition for automotive interior parts, and automotive interior parts made from the composition. More specifically, it relates to a propylene resin composition which can be used for the manufacture of automotive interior parts such as embossed trims and installment panels as a molding material having a good weld appearance, a less gloss unevenness, a good appearance performance and a low glossiness and permitting non-coating, or as a molding material having an excellent balance between impact resistance and stiffness in addition to the above-mentioned characteristics; and automotive interior parts obtained by injection molding this composition.

### Background Art

Propylene resins are excellent in workability, chemical resistance, weathering resistance, electrical properties and the like, and for this reason, the propylene resins have widely been used as general-purpose resins in fields of automotive parts, electrical appliances, office automation equipment, injection molded articles, blow molded articles, vacuum·air-pressure formed articles, films, sheets and the like.

In recent years, embossed articles which are required to possess a low glossiness have often been used as the automotive interior parts. With regard to these embossed articles, the demanded level of appearance performances such as the low glossiness in the case that these articles are used in a non-coating state, weld appearance and gloss unevenness is heightening year by year. Accordingly, a case where matte coating is made to cover the appearance performances has increased.

Therefore, if appearance performances such as the less glossy surface of the embossed articles, the weld appearance and the gloss unevenness are improved, the non-coating is possible, which leads to the curtailment of a coating cost, the simplification of a manufacturing process and the like to remarkably reduce a manufacturing cost. Therefore, the need of a material which can satisfy such appearance performances is now increasing.

On the other hand, with regard to parts which do not require a particularly high stiffness, there are increasing cases using a propylene resin in which the content of a filler as a reinforcing material is decreased for the purposes of lowering specific gravity and reducing a material cost, and cases using a propylene resin containing no filler. However, conventional polypropylene materials are particularly poor in the weld appearance, and hence, measures of partially coating defective positions to conceal them are necessary. Thus, a secondary problem of the cost still remains.

For the installment panels of the automotive interior parts which are particularly required to possess the stiffness, a propylene resin containing the filler as the reinforcing material has usually been used. However, the propylene resin containing the filler has a problem that the weld appearance is insufficient. In addition, the installment panel is set in front of a driver seat of a car, and hence, in order to prevent an accident from occurring by the reflection of sunbeams, it is necessary that the installment panel should be made of a material having a low glossiness, but a sufficiently less glossy material has not been found.

At present, the matte coating has therefore been given wholly or partially (on welded portions) on the surface of the installment panel to take measures against the above-mentioned problem, which unavoidably brings about the increase in the cost.

As techniques of improving the gloss unevenness, there have been suggested a method for preparing molded articles having the improved gloss unevenness by the use of a polypropylene which has been subjected to a cracking treatment to adjust a Mw/Mn ratio between weight-average molecular weight (Mw) and number-average molecular weight (Mn) to 6 or more (Japanese Patent Publication No. 87523/1993), and a propylene resin composition having the improved gloss unevenness (inclusive of flow marks) comprising a propylene block copolymer in which Mw/Mn is in the range of 5 to 15 and MFR is in the range of 3 to 200 g/10 min (Japanese Patent Application Laid-open No. 311032/1993).

In these techniques, however, the gloss unevenness can be improved to some extent, but the improvement effects of the weld appearance and the low glossiness are insufficient. Accordingly, the suggested techniques have not attained a technical level so far which permits the non-coating.

As propylene resin compositions, there have recently been suggested a thermoplastic resin composition for automobile bumpers which comprises a crystalline propylene polymer, a polyethylene, an ethylene-propylene copolymer rubber and talc (Japanese Patent Application Laid-open No. 149969/1995), a thermoplastic resin composition comprising a propylene-ethylene block copolymer obtained by a multi-stage polymerization and a polyolefin rubber (Japanese Patent Application Laid-open No. 149998/1995), and a polyolefin composition comprising a propylene-ethylene block copolymer obtained by a multi-stage polymerization, an ethylene-propylene copolymer rubber, a polyolefin and talc (Japanese Patent Application Laid-open No. 149997/1995). However, these compositions all intend to improve strength, moldability and coating properties, and therefore, the weld appearance and the low glossiness are not satisfactory. In consequence, the application of the suggested compositions to the automotive interior parts is limited.

Furthermore, as compositions developed to improve the low glossiness, there have been suggested a polyolefin composition which comprises a propylene polymer, a partially crosslinked thermoplastic elastomer and an ethylenepropylene-conjugated diene terpolymer (Japanese Patent Application Laid-open No. 157607/1995), and a composition comprising a modified olefin resin and a gelatinizing agent (Japanese Patent Application Laid-open No. 192509/1994). However, in these compositions, the low glossiness is attained to some extent but it is not so high as to be insufficient, and the employment of gelation or crosslinking means is necessary. In addition, they have problems of a bad uniformity, a poor surface appearance, the difficulty of reuse and the like. On the other hand, another composition has been suggested which comprises a propylene-ethylene block copolymer containing the crystalline lamellas of a propylene homopolymer having a specified thickness, a specific rubber, a polyethylene and talc (Japanese Patent Application Laid-open No. 53843/1995). However, as is apparent from examples and comparative examples thereof, any difference of the low glossiness is not observed, and it is not disclosed that an especial relation is present between the thickness and the gloss of the lamellas. In addition, the degree of the low glossiness is not so high.

### Disclosure of the Invention

Under such circumstances, the present invention is tended, and an object of the present invention is to provide a propylene resin composition which can be used for the manufacture of automotive interior parts such as embossed trims and installment panels as a molding material having a good weld appearance, a less gloss unevenness, a good appearance performance and a low glossiness and permitting non-coating, or as a molding material having an excellent balance between impact resistance and stiffness in addition to the above-mentioned characteristics; and automotive interior parts obtained by using this composition.

The present inventors have intensively researched to achieve the above-mentioned object, and as a result, it has been found that a crystalline propylene polymer-containing composition in which a relaxation time (τ) and a molecular-weight distribution index (PDI) obtained from melt viscoelasticity measurement are in the specific ranges, respectively, a propylene resin composition obtained by blending the above-mentioned composition with another thermoplastic resin and a rubbery polymer in specific ratios, and a propylene resin composition obtained by blending each of these compositions with an inorganic filler or an organic filler in a specific ratio can be suitably used to manufacture automotive interior parts as molding materials which are excellent in appearance performances such as weld appearance and gloss unevenness, has a low glossiness and permits non-coating, or molding materials which are excellent in balance between impact resistance and stiffness in addition to the above-mentioned characteristics. The present invention has been completed on the basis of such a knowledge. That is to say, the present invention is directed to
(1) a crystalline propylene polymer-containing composition (Composition I) for automotive interior parts in which (i) a melt index is in the range of 1 to 100 g/10 min, and (ii) a relaxation time (τ) obtained from melt viscoelasticity measurement is 0.35 second or less at an angular frequency ω of 10°/sec,
(2) the crystalline propylene polymer-containing composition for automotive interior parts according to the above-mentioned (1) wherein the relaxation time (τ) is in the range of 0.01 to 0.35 second,
(3) a crystalline propylene polymer-containing composition (Composition II) for automotive interior parts in which (i) a melt index is in the range of 1 to 100 g/10 min, (ii) a relaxation time (τ) obtained from melt viscoelasticity measurement is in the range of 0.01 to 0.35 second at an angular frequency ω of 10°/sec, and (iii) a molecular-weight distribution index (PDI) represented by ω₂/10ω₁ is in the range of 1 to 25 wherein ω₁ is an angular frequency at which a storage modulus (G') obtained from the melt viscoelasticity measurement is 2×10² Pa and ω₂ is an angular frequency at which the storage modulus (G') is 2×10⁴ Pa,
(4) a propylene resin composition (Composition III) for automotive interior parts which comprises 100 parts by weight of the crystalline propylene polymer-containing composition described in the above-mentioned (1) or (3) and 0.5 to 50 parts by weight of at least one selected from other thermoplastic resins and rubbery polymers,
(5) a propylene resin composition (Composition IV) for automotive interior parts which comprises 100 parts by weight of the crystalline propylene polymer-containing composition described in the above-mentioned (1) or (3) and 1 to 100 parts by weight of at least one selected from inorganic fillers and organic fillers,
(6) a propylene resin composition (Composition V) for automotive interior parts which comprises 100 parts by weight of the propylene resin composition described in the above-mentioned (4) and 1 to 100 parts by weight of at least one selected from inorganic fillers and organic fillers,
(7) a propylene-ethylene block copolymer composition (Composition VI) for automotive interior parts which (i) can be fractionated into (a) an o-dichlorobenzene-soluble fraction at 30°C and (b) an o-dichlorobenzene-insoluble fraction at 30°C by a fractionation method with the rise of a solution temperature, i.e., a temperature rising elution fractionation using o-dichlorobenzene and in which an intrinsic viscosity [η] (in decalin at 135°C) of the component (a) is in the range of 2.0 to 10 dl/g; a relaxation time τ of the component (b) obtained from melt viscoelasticity measurement is in the range of 0.01 to 0.35 second at an angular frequency ω of 10°/sec; a molecular-weight distribution index (PDI) of the component (b) represented by ω₂/10ω₁ is in the range of 1 to 18 wherein ω₁ is an angular frequency at which a storage modulus (G') obtained from the melt viscoelasticity measurement is 2×10² Pa and ω₂ is an angular frequency at which the storage modulus (G') is 2×10⁴ Pa; and an isotactic pentad fraction of the component (b) is 95% or more; and (ii) an ethylene unit content is in the range of 3 to 24% by weight,
(8) the propylene-ethylene block copolymer composition for automotive interior parts according to the above-mentioned (7) wherein the amount of the component (a) is in the range of 3 to 40% by weight and the amount of the component (b) is in the range of 97 to 60% by weight according to the temperature rising elution fractionation using o-dichlorobenzene,
(9) a propylene resin composition (Composition VII) for automotive interior parts which comprises 100 parts by weight of the propylene-ethylene block copolymer composition described in the above-mentioned (7) and 1 to 100 parts by weight of an inorganic filler,
(10) a crystalline propylene polymer-containing composition (Composition VIII) for automotive interior parts which can be fractionated into (x) an o-dichlorobenzene-soluble fraction at 30°C, (y) an o-dichlorobenzene-soluble fraction at a temperature more than 30°C and not more than 105°C and (z) an o-dichlorobenzene-insoluble fraction at 105°C by a temperature rising elution fractionation using o-dichlorobenzene and in which (i) an intrinsic viscosity [η] (in decalin at 135°C) of the component (x) is in the range of 2.0 to 10 dl/g; (ii) a relaxation time τ of the component (z) obtained from melt viscoelasticity measurement is in the range of 0.01 to 0.35 second at an angular frequency ω of 10°/sec; a molecular-weight distribution index (PDI) of the component (z) represented by ω₂/10ω₁ is in the range of 1 to 18 wherein ω₁ is an angular frequency at which a storage modulus (G') obtained from the melt viscoelasticity measurement is 2×10² Pa and ω₂ is an angular frequency at which the storage modulus (G') is 2×10⁴ Pa; (iii) a weight ratio of the amount of the component (y)/[the amount of the component (y) + the amount of the component (z)] is in the range of 0 to 0.20; and (iv) a weight ratio of the amount of the component (x)/[the amount of the component (x) + the amount of the component (y) + the amount of the component (z)] is in the range of 0.03 to 0.35,
(11) the crystalline propylene polymer-containing composition according to the above-mentioned (10) which is a propylene-ethylene block copolymer composition,
(12) the crystalline propylene polymer-containing composition according to the above-mentioned (10) which comprises 100 parts by weight of a crystalline propylene resin, a propylene-ethylene block copolymer composition or a mixture thereof and 0.1 to 50 parts by weight of at least one selected from thermoplastic elastomers and polyethylene resins,
(13) a propylene resin composition (Composition IX) for automotive interior parts which comprises 100 parts by weight of the crystalline propylene polymer-containing composition described in the above-mentioned (10) and 1 to 100 parts by weight of an inorganic filler,
(14) an automotive interior part obtained by injection molding the crystalline propylene polymer-containing composition described in the above-mentioned (1), (3) or (10),
(15) an automotive interior part obtained by injection molding the propylene resin composition described in the above-mentioned (4), (5), (6), (9) or (13),
(16) an automotive interior part obtained by injection molding the propylene-ethylene block copolymer composition described in the above-mentioned (7), and
(17) the automotive interior part according to the above-mentioned (14), (15) or (16) which is an installment panel, a console box or a trim.

### Brief Description of the Drawing

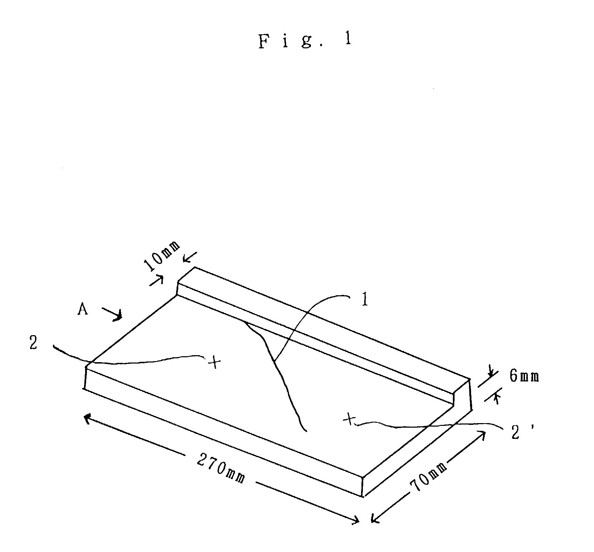

Fig. 1 is a schematic view of a molded article for appearance evaluation in each of examples and comparative examples. The surface of the molded article is an embossed surface and the back surface thereof is plane. Reference numeral 1 is a weldline, numerals 2, 2' are glossiness measuring points, and A is a gate.

### Best Mode for Carrying out the Invention

A crystalline propylene polymer-containing composition (Composition I) for automotive interior parts of the present invention has the following characteristics.

In the first place, (i) a melt index (MI) is required to be in the range of 1 to 100 g/10 min. If this MI is less than 1 g/10 min, fluidity is low, so that injection moldability is poor. Conversely, if it is more than 100 g/10 min, mechanical properties such as impact resistance of obtained molded articles deteriorate. From the viewpoints of the injection moldability and the mechanical properties of the molded articles, the preferable MI is in the range of 7 to 70 g/10 min. This MI is a value measured at a temperature of 230°C under a load of 2.16 kgf in accordance with JIS K-7210.

Furthermore, (ii) a relaxation time τ at an angular frequency ω of 10°/sec obtained from melt viscoelasticity measurement is 0.35 second or less. If this relaxation time τ is more than 0.35 second, an obtained injection-molded article is poor in gloss unevenness, weld appearance and low glossiness. From the viewpoint of the appearance performance of the injection molded article, the relaxation time τ is preferably in the range of 0.01 to 0.35 second, more preferably 0.02 to 0.30 second. This relaxation time τ is a value determined by adding a sine-like shear strain at an angular frequency ω of 10°/sec at a temperature of 175°C by the use of System 4 made by Rheometrix Co., Ltd. [a rotary type rheometer using a cone plate (25 mmφ), cone angle: 0.1 radian], and then doing calculation in accordance with a relation formula τ = G'/ωG'' wherein G' is a storage modulus and G" is a loss modulus.

In this crystalline propylene polymer-containing composition (Composition I), from the viewpoint of the appearance properties of an obtained injection molded article, a composition (Composition II) is preferable in which (i) MI is in the range of 1 to 100 g/10 min, (ii) a relaxation time τ is in the range of 0.01 to 0.35 second, and (iii) a molecular-weight distribution index (PDI) represented by ω₂/10ω₁ is in the range of 1 to 25 wherein ω₁ is an angular frequency at which a storage modulus (G') obtained from melt viscoelasticity measurement is 2×10² Pa and ω₂ is an angular frequency at which the storage modulus (G') is 2×10⁴ Pa. If the PDI is more than 25, the obtained injection molded article is poor in gloss unevenness, weld appearance and low glossiness. For the improvement of the gloss unevenness, the weld appearance and the low glossiness of the obtained injection molded article, the PDI is preferably in the range of 1 to 20, more preferably 1 to 15. This PDI can be measured under measurement conditions of 175°C and a strain of 30% by the use of System 4 made by Rheometrix Co., Ltd. [a rotary type rheometer using a cone plate (25 mmφ), cone angle: 0.1 radian] as a measuring device.

In the present invention, a propylene-ethylene block copolymer composition (Composition VI) having the following characteristics is also desirable.

This propylene-ethylene block copolymer composition (Composition VI) can be fractionated into (a) an o-dichlorobenzene (ODCB)-soluble fraction at 30°C and (b) an ODCB-insoluble fraction at 30°C by a temperature rising elution fractionation (hereinafter referred to as "T.R.E.F."). This T.R.E.F. can be carried out by the following procedure. That is to say, 20 g of a sample is added to 300 ml of ODCB, and then completely dissolved therein at about 150°C. Afterward, this solution is injected into a silica gel column (diameter: 100 mm, height: 300 mm), and then cooled to 23°C at a rate of 5°C/hour. Next, the solution is heated up to 30°C, and when its temperature becomes constant, the ODCB-soluble fraction [the component (a)] at 30°C is taken out and separated. Afterward, the solution is heated up to 135°C, while ODCB is allowed to flow at 5 mℓ/min, to elute the polymer, and this polymer is precipitated again in the five-fold volume of acetone and then collected as the ODCB-insoluble fraction [the component (b)] at 30°C.

The above-mentioned component (a) mainly comprises an amorphous polymer component, particularly an elastomer component, and an example of this amorphous polymer is a random copolymer of ethylene and another α-olefin (e.g., propylene). In this copolymer component, an ethylene unit content is usually in the range of 25 to 60% by weight, preferably 35 to 50% by weight.

On the other hand, the component (b) mainly comprises a crystalline polymer moiety, and this crystalline polymer may be the homopolymer of propylene or a copolymer of propylene and a small amount of another α-olefin such as ethylene. Moreover, the component (b) may contain a small amount of a polyethylene resin component.

In this Composition VI, an intrinsic viscosity [η] (in decalin at 135°C) of the above-mentioned component (a) is in the range of 2.0 to 10 dl/g. If this [η] is less than 2.0 dl/g, an obtained molded article is poor in weld appearance, and low glossiness on an embossed surface and impact resistance are also insufficient. Thus, from the viewpoints of the weld appearance as well as the low glossiness on the embossed surface and the impact resistance, [η] is preferably in the range of 2.2 to 9.0 dl/g, more preferably 2.4 to 8 dl/g.

The above-mentioned component (b) has a relaxation time τ of 0.01 to 0.35 second at an angular frequency ω of 10°/sec obtained from melt viscoelasticity measurement. If this relaxation time τ is in excess of 0.35 second, an obtained molded article is poor in weld appearance, and low glossiness on an embossed surface is insufficient and color unevenness easily occurs. Thus, from the viewpoints of the appearance as well as the low glossiness on the embossed surface, the relaxation time τ is preferably in the range of 0.002 to 0.30 second, more preferably 0.02 to 0.25 second.

A molecular-weight distribution index (PDI) of this component (b) represented by ω₂/10ω₁ is in the range of 1 to 18 wherein ω₁ is an angular frequency at which a storage modulus (G') obtained from melt viscoelasticity measurement is 2×10² Pa and ω₂ is an angular frequency at which the storage modulus (G') is 2×10⁴ Pa. If this PDI is in excess of 18, an obtained molded article is poor in weld appearance, low glossiness on an embossed surface is insufficient and color unevenness easily occurs. Thus, from the viewpoints of the appearance, the low glossiness and the like, the molecular-weight distribution index (PDI) is preferably in the range of 2 to 16, more preferably 2 to 14.

Furthermore, an isotactic pentad fraction of this component (b) is 91% or more. If this fraction is less than 91%, stiffness is insufficient, so that a decrease in specific gravity (a decrease in a filler content) is difficult. In view of the stiffness, the isotactic pentad fraction is preferably 93% or more, more preferably 94 or more. This isotactic pentad fraction is an isotactic pentad fraction on the basis of a pentad unit in the molecular chain of the propylene polymer, and it can be measured in accordance with a procedure described "Macromolecules", Vol. 8, p. 687 (1975).

In the present invention, the isotactic pentad fraction is a value determined by measuring ¹⁰C-NMR under conditions of a sample solvent of 1,2,4-trichlorobenzene/benzene d₆ = 9/1, a measurement temperature of 130°C, integrated times of 4,000, a pulse angle of 45° and a pulse interval of 4 seconds by the use of a JNM-EX400 type NMR device made by JEOL, Ltd.

With regard to a ratio between the respective components which can be fractionated by this T.R.E.F., usually the amount of the component (a) is in the range of 3 to 40% by weight and the amount of the component (b) is in the range of 97 to 60% by weight in order to obtain a molded article having a good weld appearance and low glossiness as well as a satisfactory stiffness and impact resistance. Preferably, the amount of the component (a) is in the range of 7 to 30% by weight and the amount of the component (b) is in the range of 93 to 70% by weight, and more preferably, the amount of the component (a) is in the range of 12 to 25% by weight and the amount of the component (b) is in the range of 88 to 75% by weight.

Next, in this Composition VI, an ethylene unit content is in the range of 3 to 24% by weight. If this content is less than 3% by weight, an obtained molded article is poor in weld appearance, and low glossiness on an embossed surface and impact resistance are insufficient. From the viewpoints of the weld appearance as well as the low glossiness on the embossed surface and the impact resistance, the ethylene unit content is preferably in the range of 4 to 20% by weight, more preferably 5 to 16% by weight.

Furthermore, in the present invention, a crystalline propylene polymer-containing composition (Composition VIII) having the following characteristics is also desirable.

This Composition VIII can be fractionated into (x) an o-dichlorobenzene (ODCB)-soluble fraction at 30°C, (y) an ODCB-soluble fraction at a temperature more than 30°C and not more than 105°C and (z) an ODCB-insoluble fraction at 105°C by a T.R.E.F. This T.R.E.F. can be carried out by the following procedure. That is to say, 20 g of a sample is added to 300 ml of ODCB, and then completely dissolved therein at about 150°C. Afterward, this solution is injected into a silica gel column (diameter: 100 mm, height: 300 mm), and then cooled to 23°C at a rate of 5°C/hour. Next, the solution is heated up to 30°C, and when its temperature becomes constant, the ODCB-soluble fraction [the component (x)] at 30°C is taken out and separated. Afterward, the solution is heated up to 105°C, while ODCB is allowed to flow at 5 mℓ/min, and when its temperature becomes constant, the polymer is eluted, precipitated again in the five-fold volume of acetone, and then collected as the ODCB-insoluble fraction [the component (y)] at a temperature more than 30°C and not more than 105°C. Next, the solution is heated up to 135°C, while ODCB is allowed to flow at 5 mℓ/min, to completely elute the polymer, and this polymer is precipitated again in the five-fold volume of acetone and then collected as the ODCB-insoluble fraction [the component (z)] at 105°C.

The above-mentioned component (x) mainly comprises an amorphous polymer component, particularly a thermoplastic elastomer component, and an example of this elastomer component is a random copolymer of ethylene in the propylene-ethylene block copolymer composition and another α-olefin (e.g., propylene). In this copolymer component, an ethylene unit content is usually in the range of 25 to 60% by weight, preferably 35 to 50% by weight. The elastomer of the this component (x) is not limited to the above-mentioned example, and examples of such elastomer include ethylene-α-olefin copolymer elastomers, hydrogenated ethylene-α-olefin-diene copolymer elastomers, hydrogenated styrene-diene copolymer elastomers and mixtures of two or more thereof which have usually been used as the elastomers.

Furthermore, no particular restriction is put on the component (y), but examples of the component (y) usually include low crystalline propylene resins and ethylene resins. In addition, the component (z) mainly comprises a crystalline propylene resin component, and this crystalline propylene resin may be the homopolymer of propylene or a copolymer of propylene and 2% by weight or less of another α-olefin such as ethylene.

In this Composition VIII, an intrinsic viscosity [η] (in decalin at 135°C) of the above-mentioned component (x) is in the range of 2.0 to 10 dl/g. If this [η] is less than 2.0 dl/g, an obtained molded article is poor in weld appearance, and low glossiness on an embossed surface is insufficient. Conversely, if [η] is more than 10 dl/g, moldability deteriorates, and for example, flow marks inconveniently appear. Thus, from the viewpoints of the weld appearance, the low glossiness on the embossed surface and the moldability, [η] is preferably in the range of 2.2 to 9.0 dl/g, more preferably 2.4 to 8.0 dl/g.

The above-mentioned component (z) has a relaxation time τ of 0.01 to 0.35 second at an angular frequency ω of 10°/sec obtained from melt viscoelasticity measurement. If this relaxation time τ is in excess of 0.35 second, an obtained molded article is poor in weld appearance, and low glossiness on an embossed surface is insufficient and color unevenness easily occurs. Thus, from the viewpoints of the appearance as well as the low glossiness on the embossed surface, the relaxation time τ is preferably in the range of 0.002 to 0.30 second, more preferably 0.02 to 0.25 second.

A molecular-weight distribution index (PDI) of this component (z) represented by ω₂/10ω₁ is in the range of 1 to 18 wherein ω₁ is an angular frequency at which a storage modulus (G') obtained from melt viscoelasticity measurement is 2×10² Pa and ω₂ is an angular frequency at which the storage modulus (G') is 2×10⁴ Pa. If this PDI is in excess of 18, an obtained molded article is poor in weld appearance, low glossiness on an embossed surface is insufficient and color unevenness easily occurs. Thus, from the viewpoints of the appearance, the low glossiness and the like, the molecular-weight distribution index (PDI) is preferably in the range of 2 to 16, more preferably 2 to 14.

Furthermore, an isotactic pentad fraction of this component (z) is usually 91% or more. If this fraction is less than 91%, stiffness is insufficient, so that a decrease in specific gravity (a decrease in a filler content) is difficult. In view of the stiffness, the isotactic pentad fraction is preferably 93% or more, more preferably 94% or more.

With regard to a ratio between the respective components which can be fractionated by this T.R.E.F., the weight ratio of the amount of the component (y)/[the amount of the component (y) + the amount of the component (z)] is in the range of 0 to 0.20. If this weight ratio is in excess of 0.20, an obtained molded article is poor in weld appearance, and low glossiness on an embossed surface is insufficient. In addition, flow marks and color unevenness easily occurs. Thus, from the viewpoints of the appearance, the low glossiness on the embossed surface and the like, the weight ratio of the amount of the component (y)/[the amount of the component (y) + the amount of the component (z)] is preferably in the range of 0 to 0.15, more preferably 0 to 0.12. Moreover, a weight ratio of the amount of the component (x)/[the amount of the component (x) + the amount of the component (y) + the amount of the component (z)] is in the range of 0.03 to 0.35. If this weight ratio is less than 0.03, the impact resistance of an obtained molded article is not sufficient, and weld appearance and low glossiness on an embossed surface is insufficient. Conversely, if it is more than 0.35, the weld appearance is poor, the low glossiness on the embossed surface is insufficient, color unevenness easily occurs, and stiffness is also insufficient. Thus, in view of balance among the appearance, the low glossiness on the embossed surface, the impact resistance and the stiffness, the weight ratio of the amount of the component (x)/[the amount of the component (x) + the amount of the component (y) + the amount of the component (z)] is preferably in the range of 0.05 to 0.30, more preferably 0.07 to 0.25.

No particular restriction is put on this Composition VIII, so far as it meets the above-mentioned conditions. For example, Composition VIII may be a propylene-ethylene block copolymer composition or a composition which comprises 100 parts by weight of a crystalline polypropylene, a propylene-ethylene block copolymer composition or a mixture thereof and about 0.5 to 50 parts by weight of at least one selected from the group consisting of thermoplastic elastomers such as amorphous ethylene-α-olefin copolymer elastomers and ethylene resins.

The above-mentioned propylene-ethylene block copolymer composition is a composition which comprises a crystalline portion mainly comprising of a propylene homopolymer or a propylene-ethylene random copolymer having a low ethylene unit content and an amorphous portion comprising an ethylene-propylene random copolymer having a relatively high ethylene unit content. In this propylene-ethylene block copolymer composition, the above-mentioned crystalline portion or amorphous portion may contain another α-olefin unit such as 1-butene in a suitable ratio.

In this propylene-ethylene block copolymer composition, the ethylene unit content is usually in the range of 3 to 30% by weight. If this content is less than 3% by weight, an obtained molded article is poor in weld appearance, and low glossiness on an embossed surface and impact resistance are insufficient. From the viewpoints of the weld appearance as well as the low glossiness on the embossed surface and the impact resistance, the ethylene unit content is preferably in the range of 4 to 25% by weight, more preferably 5 to 20% by weight.

As described above, in the present invention, the crystalline propylene polymer-containing compositions of Compositions I and II specify the relaxation time τ, and both of the relaxation time (τ) and the molecular-weight distribution index (PDI), respectively, in the whole compositions.

On the contrary, the propylene-ethylene block copolymer composition of Composition VI specifies the relaxation time τ and the molecular-weight distribution index (PDI) of the ODCB-insoluble fraction at 30°C fractionated by the T.R.E.F., and the crystalline propylene polymer-containing composition of Composition VIII specifies the relaxation time τ and the molecular-weight distribution index (PDI) of the ODCB-insoluble fraction at 105°C fractionated by the T.R.E.F.

A propylene resin composition (Composition III) for automotive interior parts according to the present invention comprises 100 parts by weight of the above-mentioned crystalline propylene polymer-containing composition (Composition I or II) and 0.5 to 50 parts by weight of at least one selected from other thermoplastic resins and rubbery polymers. If the content of the selected thermoplastic resin or rubbery polymer is less than 0.5 part by weight, the improvement effect of physical properties such as impact resistance cannot be sufficiently exerted, and conversely, if it is more than 50 parts by weight, stiffness at a high temperature deteriorates and scratch-resistant whitening properties decline, so that an appearance failure tends to occur. From the viewpoints of the improvement effect of the physical properties and the appearance, the content of the thermoplastic resin or the rubbery polymer is preferably in the range of 1 to 30 parts by weight, more preferably 3 to 20 parts by weight based on 100 parts by weight of Composition I or II.

Examples of the other thermoplastic resins which can be used in this propylene resin composition (Composition III) include other olefin resins, styrene resins, condensed high polymers and addition high polymers. Typical examples of the other olefin resins include crystalline propylene homopolymer, random propylene copolymers, block propylene copolymers, high-density polyethylenes, low-density polyethylenes, poly-3-methybutene-1, poly-4-methylpentene-1, straight-chain low-density polyethylenes obtained by using 1-butene, 1-hexene, 1-octene, 4-methylpentene-1 and 3-methylbutene-1, ethylene-vinyl acetate copolymers, saponified ethylene-vinyl acetate copolymers, ethylene-acrylic acid copolymers, ethylene-acrylic ester copolymers, ethylenic ionomers, propylene homopolymer and other propylene copolymers. Typical examples of the styrene resins include general-purpose polystyrenes, isotactic polystyrenes and high-impact polystyrenes (modified with rubbers). Typical examples of the condensed high polymers include polyacetals, polycarbonates, polyamides such as 6-nylon and 6,6-nylon, polyesters such as polyethylene terephthalate and polybutylene terephthalate, polyphenylene ethers, polyimides, polysulfones, polyether sulfones and polyphenylene sulfides. Examples of the addition high polymers include polymers obtained from polar vinyl monomers and polymers obtained from diene monomers, and typical examples thereof include polymethyl methacrylate, polyacrylonitrile, acrylonitrile-butadiene copolymer, acrylonitrile-butadiene-styrene copolymer, diene polymers obtained hydrogenating a diene chain, and thermoplastic elastomers.

On the other hand, examples of the rubbery polymer include natural rubbers, styrene-butadiene copolymer rubbers, butadiene rubbers, isoprene rubbers, ethylene-propylene copolymer rubbers, ethylene-propylene-diene copolymer rubbers, acrylonitrile-butadiene copolymer rubbers, chloroprene rubbers, butyl rubbers, urethane rubbers, silicone rubbers, acrylic rubbers and epichlorohydrin rubbers.

These thermoplastic resins and rubbery polymers may be used singly or in a combination of two or more thereof.

A propylene resin composition (Composition IV) for automotive interior parts according to the present invention comprises 100 parts by weight of the above-mentioned crystalline propylene polymer-containing composition (Composition I or II) and 1 to 100 parts by weight of at least one selected from inorganic fillers and organic fillers. Furthermore, a propylene resin composition (Composition V) for automotive interior parts comprises 100 parts by weight of the above-mentioned polypropylene resin composition (Composition III) and 1 to 100 parts by weight of at least one selected from inorganic fillers and organic fillers. In these compositions IV and V, if the content of the inorganic filler or the organic filler is less than 1 part by weight, the stiffness of an obtained molded article is insufficient, and if it is more than 100 parts by weight, appearance failures such as poor weld appearance and gloss unevenness occur on the obtained molded article, and impact resistance and scratch-resistant whitening properties also deteriorate. From the viewpoints of the appearance, the stiffness, the impact resistance, the scratch-resistant whitening properties and the like of the molded article, the content of the inorganic filler or the organic filler is preferably in the range of 3 to 60 parts by weight, more preferably 5 to 40 parts by weight based on 100 parts by weight of the resin component.

No particular restriction is put on the shape of the inorganic filler and the organic filler which can be used in the above-mentioned compositions IV and V, and any shape of grains, plates, rods, fibers and whiskers can be employed.

Examples of the inorganic filler include silica, diatomaceous earth, barium ferrite, oxides such as beryllium oxide, pumice and pumice balloons, hydroxides such as aluminum hydroxide, magnesium hydroxide and basic magnesium carbonate, carbonates such as calcium carbonate, magnesium carbonate, dolomite and dawsonite, sulfates and sulfites such as magnesium sulfate, calcium sulfate, barium sulfate, ammonium sulfate and calcium sulfite, silicates such as talc, clay, mica, asbestos, glass fibers, glass balloons, glass beads, calcium silicate, montmorillonite and bentonite, carbons such as carbon black, graphite, carbon fibers and carbon hollow spheres, molybdenum sulfide, boron fibers, zinc borate, barium metaborate, calcium borate, sodium borate, magnesium oxysulfate fibers and various kinds of metallic fibers.

On the other hand, examples of the organic fillers include husky fibers such as rice husks, woodmeals, cotton, jute, fine paper pieces, cellophane pieces, aromatic polyamide fibers, cellulose fibers, nylon fibers, polyester fibers, polypropylene fibers and thermosetting resin powders.

These inorganic fillers and organic fillers may be used singly or in a combination of two or more thereof. Among the above-mentioned fillers, talc, mica, calcium carbonate, magnesium sulfate and glass fibers are preferable, and talc is particularly preferable. This talc preferably has an average particle diameter of 1 to 8 µm and an average aspect ratio of 4 or more from the viewpoints of physical properties such as stiffness, impact resistance, scratch-resistant whitening properties, weld appearance and gloss unevenness. The talc obtained by a processing grinding method is particularly preferable from the viewpoints of the physical properties and stiffness.

Furthermore, a propylene resin composition (Composition VII) for automotive interior parts according to the present invention comprises 100 parts by weight of the above-mentioned propylene-ethylene block copolymer composition (Composition VI) and 1 to 100 parts by weight of an inorganic filler. If the content of this inorganic filler is less than 1 part by weight, the stiffness of an obtained molded article is insufficient, and conversely if it is more than 100 parts by weight, appearance failures such as weld appearance and gloss unevenness occur on the obtained molded article, and impact resistance and scratch-resistant whitening properties also deteriorate. From the viewpoints of the appearance, stiffness, impact resistance and scratch-resistant whitening properties of the automotive interior parts, the content of the inorganic filler is preferably in the range of 3 to 60 parts by weight, more preferably 5 to 40 parts by weight based on 100 parts by weight of the Composition VI.

No particular restriction is put on the shape of the inorganic filler, and any shape of grains, plates, rods, fibers and whiskers can be employed. Examples of the inorganic filler include the same as exemplified as the inorganic fillers for use in the above-mentioned Compositions IV and V. These inorganic fillers may be used singly or in a combination of two or more thereof. Among these fillers, talc, mica, calcium carbonate and glass fibers are preferable, and talc is particularly preferable. This talc preferably has an average particle diameter of 1 to 8 µm and an average aspect ratio of 4 or more from the viewpoints of physical properties such as stiffness, impact resistance, scratch-resistant whitening properties, weld appearance and gloss unevenness. The talc obtained by a processing grinding method is particularly preferable from the viewpoints of the physical properties and stiffness.

Furthermore, a propylene resin composition (Composition IX) for automotive interior parts according to the present invention comprises 100 parts by weight of the crystalline propylene polymer-containing composition (Composition VIII) and 1 to 100 parts by weight of an inorganic filler. If the content of this inorganic filler is less than 1 part by weight, the stiffness of an obtained molded article is insufficient, and conversely if it is more than 100 parts by weight, appearance failures such as weld appearance and gloss unevenness occur on the obtained molded article, and impact resistance and scratch-resistant whitening properties also deteriorate. From the viewpoints of the appearance, stiffness, impact resistance and scratch-resistant whitening properties of the automotive interior parts, the content of the inorganic filler is preferably in the range of 3 to 60 parts by weight, more preferably 5 to 40 parts by weight based on 100 parts by weight of the Composition VIII. In addition, examples of the usable inorganic filler include the same inorganic fillers as exemplified in the above-mentioned Composition VII.

No particular restriction is put on methods for preparing the crystalline propylene polymer-containing composition or the propylene-ethylene block copolymer composition of the present invention, and various methods are applicable, so far as they can prepare the crystalline propylene polymer-containing composition or the propylene-ethylene block copolymer composition which can meet the above-mentioned requirements. For example, there are a method which comprises blending some components separately obtained by polymerization, and a method for preparing the propylene-ethylene block copolymer composition which comprises carrying out a multi-stage polymerization in the presence of a catalyst comprising (X) (i) a solid catalyst component comprising magnesium, titanium, a halogen atom and an electron donor and (ii) a solid component comprising a crystalline polyolefin which can be used as needed, (Y) an organic aluminum compound and (Z) a usually usable electron donating compound.

Next, reference will be made to a process for preparing the propylene block copolymer composition by the multi-stage polymerization.

In the catalyst for use in this multi-stage polymerization, the solid component (X) comprises a solid catalyst component (i) comprising magnesium, titanium, a halogen atom and an electron donor and a component (ii) comprising a crystalline polyolefin which can be used as needed. The solid catalyst component (i) contains magnesium, titanium, a halogen atom and an electron donor as essential ingredients, and this component (i) can be prepared by bringing a magnesium compound and a titanium compound into contact with the electron donor. In this case, the halogen atom is contained in the magnesium compound or the titanium compound as a halogen compound.

Examples of the magnesium compound include magnesium dihalides such as magnesium dichloride, magnesium oxide, magnesium hydroxide, hydrotalcite, carboxylates of magnesium, alkoxymagnesiums such as diethoxymagnesium, allyloxymagnesium, alkoxymagnesium halides, allyloxymagnesium halides, alkylmagnesiums such as ethylbutylmagnesium, alkylmagnesiums halides, and reaction products of organic magnesium compounds and the electron donors, halosilanes, alkoxysilanes, silanols and aluminum compounds. Above all, magnesium halides, alkoxymagnesiums, alkylmagnesiums and alkylmagnesium halides are preferable. These magnesium compounds may be used singly or in a combination of two or more thereof.

As another magnesium compound, a reaction product of metallic magnesium, a halogen and an alcohol can be used. No particular restriction is put on metallic magnesium which can be used in this case, and metallic magnesium having any particle diameter and any morphology of granules, ribbons and powder can be used. In addition, no particular restriction is put on the surface state of metallic magnesium, but preferably a film such as magnesium oxide is not formed on the surface.

As the above-mentioned alcohol, an optional alcohol can be used, but it is preferred to use a lower alcohol having 1 to 6 carbon atoms. Ethanol is particularly desirable, because it can provide the solid catalyst component which can remarkably improve the expression of a catalytic performance. No particular restriction is put on a purity of the alcohol and a moisture content in the alcohol. However, if the alcohol having the high moisture content is used, a magnesium hydroxide film is formed on the surface of metallic magnesium, and hence the moisture content is preferably 1% by weight or less, more preferably 2,000 ppm or less. In short, the lower the moisture content is, the more advantageous.

No particular restriction is put on the halogen and a halogen-containing compound, and as the halogen-containing compound, any compound can be used, so far as it contains a halogen atom therein. In this case, the kind of halogen atom is not particularly limited, but chlorine, bromine and iodine can be used. In particular, iodine can desirably be used. Of the halogen-containing compounds, a halogen-containing metallic compound is particularly preferable. No particular restriction is put on the state, shape and particle diameter of the halogen or the halogen-containing compound, and its optional morphology is acceptable. For example, it can be used in the form of a solution in which an alcohol solvent (e.g., ethanol) is used.

The amount of the alcohol to be used is selected in the range of 2 to 100 mol, preferably 5 to 50 mol per mol of metallic magnesium. If an excess amount of the alcohol is used, there is a tendency that the magnesium compound having a good morphology is scarcely obtained. Conversely, if an insufficient amount of the alcohol is used, there is a fear that a reaction with metallic magnesium does not smoothly proceed.

The halogen or the halogen-containing compound is usually used in a ratio of 0.0001 gram-atom or more, preferably 0.0005 gram-atom or more, more preferably 0.001 gram-atom in terms of a halogen atom per gram-atom of metallic magnesium. If the ratio is less than 0.0001 gram-atom, when the obtained magnesium compound is used without being ground, the amount of a supported component, activity, steric regularity, the morphology of a produced polymer and the like deteriorate, and hence, the grinding treatment is essential, which is troublesome. Moreover, the particle diameter of the magnesium compound to be obtained can be optionally controlled by suitably selecting the amount of the halogen or the halogen-containing compound to be used.

The reaction itself of metallic magnesium, the alcohol and the halogen or the halogen-containing compound can be carried out by the use of a known procedure. For example, metallic magnesium, the alcohol and the halogen or the halogen-containing compound are reacted usually for about 20 to 30 hours under reflux until the generation of a hydrogen gas has not been observed any more, to obtain the desired magnesium compound. Concretely, for example, in the case that iodine is used as the halogen, there are a method which comprises pouring metallic magnesium and solid iodine into the alcohol, followed by heating and reflux, a method which comprises adding an alcohol solution of metallic magnesium and iodine dropwise into the alcohol, followed by heating and reflux, and a method which comprises adding an alcohol solution of iodine dropwise to an alcohol solution containing metallic magnesium, while the alcohol solution containing metallic magnesium is heated. Any method is preferably carried out under the atmosphere of an inert gas such as a nitrogen gas or an argon gas and, if necessary, by the use of an inert organic solvent (e.g., a saturated hydrocarbon such as n-hexane). The total amounts of metallic magnesium, the alcohol and the halogen or the halogen-containing compound do not have to be poured into a reaction vessel from an initial stage, and these materials may be divided and then poured. A particularly preferable procedure comprises first pouring the total amount of the alcohol into the reaction vessel, and then separately pouring the amounts of metallic magnesium divided into several portions at some intervals.

According to such a procedure, the generation of a large amount of the hydrogen gas can be prevented, and so this procedure is very desirable from the viewpoint of safety. In addition, the reaction vessel can also be miniaturized. Moreover, the entrainment of the alcohol and the halogen or the halogen-containing compound which would be caused by the temporary generation of the large amount of the hydrogen gas can also be prevented. The number of the portions into which metallic magnesium should be divided can be decided in consideration of the scale of the reaction vessel, and usually, the number of the metallic magnesium portions is preferably in the range of 5 to 10 in view of operation efficiency. Needless to say, a reaction system may be either of a batch system and a continuous system. An alternative method which can be used in the present invention comprises first pouring a small amount of metallic magnesium into the whole alcohol placed in the reaction vessel at an initial stage, separating and removing a product obtained by the reaction therefrom and then transferring the same to another vessel, pouring a small amount of metallic magnesium thereinto again, and then repeating this operation.

Prior to using the thus obtained magnesium compound in the next preparation of the solid catalyst component, the magnesium compound may be dried, or may be filtered and then washed with an inert solvent such as heptane. In either case, the obtained magnesium compound can be used in the next step without grinding and without a classifying operation for uniforming a particle size distribution.

On the other hand, examples of the above-mentioned titanium compound include tetraalkoxytitaniums such as tetramethoxytitanium, tetraethoxytitanium, tetra-n-propoxytitanium, tetraisopropoxytitanium, tetra-n-butoxytitanium, tetraisobutoxytitanium, tetracyclohexyloxytitanium and tetraphenoxytitanium, titanium tetrahalides such as titanium tetrachloride, titanium tetrabromide and titanium tetraiodide, alkoxytitanium halides such as methoxytitanium trichloride, ethoxytitanium trichloride, propoxytitanium trichloride, n-butoxytitanium trichloride and ethoxytitanium tribromide, dialkoxytitanium dihalides such as dimethoxytitanium dichloride, diethoxytitanium dichloride, dipropoxytitanium dichloride, di-n-butoxytitanium dichloride and diethoxytitanium dibromide, and trialkoxytitanium monohalides such as trimethoxytitanium chloride, triethoxytitanium chloride, tripropoxytitanium chloride and tri-n-butoxytitanium chloride. Above all, the titanium compounds having a high halogen content, particularly titanium tetrachloride is preferable. These titanium compounds may be used singly or in a combination of two or more thereof.

As the above-mentioned electron donor, there can be used compounds which will be exemplified as the electron donating compound which is the component (Z).

The preparation of the solid catalyst component (i) can be carried out by any of known methods (Japanese Patent Application Laid-open Nos. 43094/1978, 135102/1980, 135103/1980, 18606/1981, 166205/1981, 63309/1982, 190004/1982, 300407/1982 and 47003/1983.

Usually in the composition of the thus prepared solid catalyst component (i), a magnesium/titanium atom ratio is in the range of 2 to 100, a halogen/titanium atom ratio is in the range of 5 to 100, and a molar ratio of the electron donor/titanium is in the range of 0.1 to 10.

On the other hand, as the crystalline polyolefin of the component (ii) which can be used as needed in the preparation of the solid component (X), there can be used, for example, a crystalline polyolefin obtained from an α-olefin having 2 to 10 carbon atoms such as polyethylene, polypropylene, polybutene or poly-4-methyl-1-pentene. This crystalline polyolefin can be obtained by (1) a method which comprises preliminarily polymerizing propylene in the presence of a combination of the above-mentioned solid catalyst component (i), an organic aluminum compound and an electron donating compound which can be used as needed (a preliminary polymerization method), (2) a method which comprises dispersing the above-mentioned solid catalyst component (i), an organic aluminum compound which can be used as needed and an electron donating compound (melting point: 100°C or more) in a crystalline powder such as crystalline polyethylene or polypropylene having a uniform particle diameter (a dispersion method), or (3) a method which comprises a combination of the above-mentioned methods (1) and (2).

In the above-mentioned preliminary polymerization method (1), an aluminum/titanium atom ratio is usually selected in the range of 0.1 to 100, preferably 0.5 to 5, and a molar ratio of the electron donating compound/titanium is selected in the range of 0 to 50, preferably 0.1 to 2.

In the solid component (X), a ratio between the solid catalyst component (i) and the crystalline polyolefin (ii) is selected so that a weight ratio of the crystalline polyolefin (ii) to the solid catalyst component (i) may be usually in the range of 0.03 to 200, preferably 0.10 to 50.

Next, examples of the organic aluminum compound which can be used as the component (Y) include compounds represented by the general formula (I)

AlR¹ ₚX₃₋ₚ (I)

wherein R¹ is an alkyl group having 3 to 20 carbon atoms or an aryl group having 6 to 20; X is a halogen atom; and p is a value of 1 to 3.

Suitably usable examples of these compounds include trialkylaluminums such as triisopropylaluminum, triisobutylaluminum and trioctylaluminum, dialkylaluminum monohalides such as diethylaluminum monochloride, diisopropylaluminum monochloride, diisobutylaluminum monochloride and dioctylaluminum monochloride, and alkylaluminum sesquihalides such as ethylaluminum sesquichloride. These aluminum compounds may be used singly or in a combination of two or more thereof.

Additionally, in the catalyst, the electron donating compound is usually used as the component (Z). This electron donating compound is a compound having oxygen, nitrogen, phosphorus, sulfur or silicon, and fundamentally, the electron donating compound is a compound having the improvement performance of regularity.

Examples of such an electron donating compound include organic silicon compounds, esters, thioesters, amines, ketones, nitriles, phosphines, ethers, thioethers, acid anhydrides, acid halides, acid amides, aldehydes, organic acids and azo compounds.

Typical examples of the electron donating compound include organic silicon compounds such as diphenyldimethoxysilane, diphenyldiethoxysilane, cyclohexylmethyldimethoxysilane, dicyclopentyldimethoxysilane, diisopropyldimethoxysilane, t-butyl-n-propyldimethoxysilane, dibenzyldimethoxysilane, tetramethoxysilane, tetraethoxysilane, tetraphenoxysilane, methyltrimethoxysilane, methyltriethoxysilane, methyltriphenoxysilane, phenyltrimethoxysilane, phenyltriethoxysilane and benzyltrimethoxysilane, aromatic dicarboxylic esters such as monomethyl phthalate, monoethyl phthalate, monopropyl phthalate, monobutyl phthalate, monoisobutyl phthalate, monoamyl phthalate, monoisoamyl phthalate, monomethyl terephthalate, monoethyl terephthalate, monopropyl terephthalate, monobutyl terephthalate, monoisobutyl terephthalate, dimethyl phthalate, diethyl phthalate, dipropyl phthalate, dibutyl phthalate, diisobutyl phthalate, diamyl phthalate, diisoamyl phthalate, methylethyl phthalate, methylisobutyl phthalate, methylpropyl phthalate, ethylbutyl phthalate, ethylisobutyl phthalate, ethylpropyl phthalate, propylisobutyl phthalate, dimethyl terephthalate, diethyl terephthalate, dipropyl terephthalate, diisobutyl terephthalate, methylethyl terephthalate, methylisobutyl terephthalate, methylpropyl terephthalate, ethylbutyl terephthalate, ethylisobutyl terephthalate, ethylpropyl terephthalate, propylisobutyl terephthalate, dimethyl isophthalate, diethyl isophthalate, dipropyl isophthalate, diisobutyl isophthalate, methylethyl isophthalate, methylisobutyl isophthalate, methylpropyl isophthalate, ethylbutyl isophthalate, ethylisobutyl isophthalate, ethylpropyl isophthalate and propylisobutyl isophthalate, monoesters such as methyl formate, ethyl formate, methyl acetate, ethyl acetate, vinyl acetate, propyl acetate, octyl acetate, cyclohexyl acetate, ethyl propionate, methyl butyrate, ethyl butyrate, ethyl valerate, methyl chloroacetate, ethyl dichloroacetate, methyl methacrylate, ethyl crotonate, ethyl pivalate, dimethyl maleate, ethyl cyclohexanecarboxylate, methyl benzoate, ethyl benzoate, propyl benzoate, butyl benzoate, octyl benzoate, cyclohexyl benzoate, phenyl benzoate, benzyl benzoate, methyl toluylate, ethyl toluylate, amyl toluylate, ethyl ethylbenzoate, methyl anisate, ethyl anisate, ethyl ethoxybenzoate, ethyl p-butoxybenzoate, ethyl o-chlorobenzoate and ethyl naphthoate, esters such as γ-butyrolactone, δ-valerolactone, coumarin, phthalide and ethylene carbonate, organic acids such as benzoic acid and p-oxybenzoic acid, acid anhydrides such as succinic anhydride, benzoic anhydride and anhydrous p-toluic acid, ketones such as acetone, methyl ethyl ketone, methyl isobutyl ketone, acetophenone, benzophenone and benzoquinone, aldehydes such as acetaldehyde, propionaldehyde, octylaldehyde, tolualdehyde, benzaldehyde and naphthylaldehyde, acid halides such as acetyl chloride, acetyl bromide, propionyl chloride, butyl chloride, isobutyryl chloride, 2-methylpropionyl chloride, valeryl chloride, isovaleryl chloride, hexanoyl chloride, methylhexanoyl chloride, 2-ethylhexanoyl chloride, octanoyl chloride, decanoyl chloride, undecanoyl chloride, hexadecanoyl chloride, octadecanoyl chloride, benzylcarbonyl chloride, cyclohexanecarbonyl chloride, malonyl dichloride, succinyl dichloride, pentanedioleyl dichloride, hexanedioleyl dichloride, cyclohexanedicarbonyl dichloride, benzoyl chloride, benzoyl bromide, methylbenzoyl chloride, phthaloyl chloride, isophthaloyl chloride, terephthaloyl chloride and benzene-1,2,4-tricarbonyl trichloride, ethers such as methyl ether, ethyl ether, isopropyl ether, n-butyl ether, isopropyl methyl ether, isopropyl ethyl ether, t-butyl ethyl ether, t-butyl-n-propyl ether, t-butyl-n-butyl ether, t-amyl methyl ether, t-amyl ethyl ether, amyl ether, tetrahydrofuran, anisole, diphenyl ether and ethylene glycol butyl ether, acid amides such as acetic amide, benzoic amide and toluic amide, amines such as tributylamine, N,N'-dimethylpiperazine, tribenzylamine, aniline, pyridine, pyrroline and tetramethylethylenediamine, nitriles such as acetonitrile, benzonitrile and trinitrile, and azo compounds such as 2,2'-azobis(2-methylpropane), 2,2'-azobis(2-ethylpropane) and 2,2'-azobis(2-methylpentane) in which a steric hindrance substituent is linked to an azo bond.

Above all, the organic silicon compounds, esters, ketones, ethers, thioethers, acid anhydrides and acid halides are preferable. Particularly preferable examples of the above-mentioned compounds include organic silicon compounds such as diphenyldimethoxysilane, cyclohexyldimethoxysilane, dicyclopentyldimethoxysilane and t-butyl-n-propyldimethoxysilane, aromatic dicarboxylic diesters such as di-n-butyl phthalate and diisobutyl phthalate, and alkyl esters of aromatic monocarboxylic acids such as benzoic acid, p-methoxybenzoic acid, p-ethoxybenzoic acid and p-toluic acid. These electron donating compounds may be used singly or in a combination of two or more thereof. With regard to the amounts of the respective components to be used in the catalyst system, the solid component (X) is usually used in such an amount as to be in the range of 0.0005 to 1 mol with respect to 1 ℓ of a reaction volume in terms of a titanium atom. The organic aluminum compound (Y) is used in such an amount that an aluminum/titanium atom ratio is usually in the range of 1 to 3000, preferably 40 to 800. If this amount deviates from the above-mentioned range, there is a fear that a catalyst activity is poor. Reference has just been made to the manufacturing process in which the solid catalyst of Ziegler catalyst series is used, but a catalyst of metallocene series to which much attention has nowadays been paid can also be used in place of the above-mentioned catalyst.

The crystalline propylene polymer-containing composition according to the present invention can be obtained by various methods, and for example, it can be prepared by a multi-stage polymerization in the presence of the above-mentioned catalyst. A polymerization order and the number of polymerization stages in the multi-stage polymerization can optionally be selected. For example, in the first polymerization (the first stage polymerization), the homopolymerization or copolymerization (containing 2% by weight or less of another olefin) of propylene is carried out so that the crystalline propylene polymer may be obtained, and in the second stage et seq., the random copolymerization of another α-olefin and propylene, or the random copolymerization of another α-olefin, propylene and a polyene can be carried out. Here, examples of the other α-olefin include straight-chain α-olefins such as ethylene, 1-butene, 1-pentene and 1-hexene, and branched α-olefins such as 3-methylbutene-1 and 4-methylpentene-1. They may be used singly or in a combination of two or more thereof. Above all, ethylene is suitable. Furthermore, examples of the polyene include dicyclopentadiene and tricyclopentadiene, and they may be used singly or in a combination of two or more thereof.

In the case that the polymerization is done by a gaseous phase polymerization, in the homopolymerization stage of propylene, polymerization pressure is selected in the range of 1 to 200 kg/cm²G, preferably 1 to 100 kg/cm²G, and polymerization temperature is selected in the range of 40 to 100°C, preferably 50 to 90°C. In the other α-olefin-propylene copolymerization stage or the other α-olefin-propylene-polyene copolymerization stage, polymerization pressure is selected in the range of 1 to 150 kg/cm²G, preferably 1 to 100 kg/cm²G, and polymerization temperature is selected in the range of 20 to 100°C, preferably 30 to 80°C. In either stage, the molecular weight of the polymer can be adjusted by a known means, for example, by controlling the concentration of hydrogen in a polymerizer or by melting and kneading the copolymer in the presence of an organic peroxide. Polymerization time is suitably selected in the range of 5 minutes to 10 hours.

In the polymerization, the respective components constituting the catalyst system, i.e., the components (X), (Y) and (Z) may be mixed at a predetermined ratio to bring them into contact with one another, and immediately a monomer may then be introduced thereinto, thereby initiating the polymerization. Alternatively, after the contact, aging may be carried out for a period of about 0.2 to 3 hours, and the monomer may then be introduced. Furthermore, these catalyst components can be suspended in an inert solvent or an olefin prior to their feeding.

A post treatment after the polymerization can be carried out in a usual manner. That is to say, in the gaseous phase polymerization process, after the polymerization, a nitrogen gas may be blown into the polymer powder taken out from a polymerizer in order to remove the monomer from the polymer powder. If necessary, the polymer powder may be pelletized by an extruder, and in this case, in order to completely deactivate the catalyst, a small amount of water or an alcohol can be added. In the case of a bulk polymerization process, after the polymerization, the monomer can completely be separated from the polymer taken out from the polymerizer, and the monomer-free polymer may then be pelletized.

In the present invention, some additive can be blended with each of the above-mentioned compositions I to IX as needed to prepare a molding material, so far as the object of the present invention is not impaired. Examples of the additives include a colorant, an antioxidant, a heat stabilizer, an ultraviolet light absorber, a light stabilizer, a chlorine capturer, a lubricant, an antistatic agent, a release agent, a flame-retardant, a synthetic oil and a wax. The amount of the colorant to be blended is 5 parts by weight or less, preferably 3 parts by weight or less based on 100 parts by weight of the resin component or the total of the resin component and the inorganic filer or the organic filler. If the amount of the colorant to be blended is more than 5 parts by weight, the stiffness of an obtained molded article at a high temperature tends to deteriorate, and a manufacturing cost increases.

No particular restriction is put on the preparation method of the molding material, and for example, there can be used a method which comprises melting and kneading the resin component and various kinds of additives by the use of a uniaxial extruder, a twin-screw extruder, a Banbury mixer, a kneader or a roll, or in the case of injection molding, a method which comprises dryblending them at the time of molding. In this dryblending method, it is advantageous to use a master batch containing the resin component as a base. The blending of these materials can be carried out in the manufacturing process of the crystalline propylene polymer-containing composition, for example, in the polymerization step or the pelletizing step.

The automotive interior parts of the present invention can be manufactured by injection molding the thus obtained molding material. No particular restriction is put on this injection molding method, and there can be used conventional methods (inclusive of an injection compression molding method and a gas feed injection molding method) which have heretofore been used in the injection molding of propylene resins.

The automotive interior parts of the present invention are particularly desirable as embossed installment panels, console boxes and trims.

Next, the present invention will be described in more detail with reference to examples, but the scope of the present invention should not be limited to these examples at all.

### Preparation Example 1

### (1) Preparation of magnesium compound

A 12-ℓ glass reactor equipped with a stirrer was fully purged with a nitrogen gas, and about 4,860 g of ethanol, 32 g of iodine and 320 g of metallic magnesium were then poured into the reactor. Afterward, reaction was carried out under reflux conditions with stirring to obtain a solid reaction product. Next, the reaction solution containing this solid reaction product was dried under reduced pressure, thereby obtaining a magnesium compound (a solid product).

### (2) Preparation of solid catalyst component

In a 5-ℓ glass three neck distillation flask which had been fully purged with a nitrogen gas were placed 160 g of the magnesium compound (unground) obtained in the above-mentioned (1), 800 mℓ of purified heptane, 24 mℓ of silicon tetrachloride and 23 mℓ of diethyl phthalate. Afterward, the system was maintained at 90°C, and 770 mℓ of titanium tetrachloride was poured into the flask with stirring. Then, reaction was carried out at 110°C for 2 hours. The resultant solid component was separated, and then washed with purified heptane at 80°C. Furthermore, 1,220 mℓ of titanium tetrachloride was added, and reaction was then done at 110°C for 2 hours. Afterward, the reaction product was fully washed with purified heptane to obtain a solid catalyst component.

### (3) Pretreatment for polymerization

In a 500-ℓ reaction vessel equipped with a stirring blade was placed 230 ℓ of n-heptane, and 25 kg of the solid catalyst component obtained in the above-mentioned (2) was then added thereto. Next, triethylaluminum and cyclohexylmethyldimethoxysilane were added into the solution in ratios of 0.6 mol and 0.4 mol, respectively, with respect to 1 gram-atom of Ti in this solid catalyst component, and propylene was then introduced thereinto until a propylene partial pressure had reached 0.3 kg/cm³G, followed by reaction at 20°C for 4 hours. After the completion of the reaction, the solid catalyst component was washed with n-heptane several times, and carbon dioxide was then fed to the solution, followed by stirring for 24 hours.

### (4) Preparation of propylene-ethylene block copolymer composition (PP-1)

In the first step, the treated solid catalyst component of the above-mentioned (3), triethylaluminum and cyclohexylmethyldimethoxysilane were fed to a 200-ℓ polymerizer (homopolymerizer) equipped with a stirring blade at feed rates of 3 mmol/hr in terms of a Ti atom, 0.50 mol/hr and 50 mmol/hr, respectively, and they were then reacted at a polymerization temperature of 80°C under a propylene pressure of 28 kg/cm²G. In this case, a hydrogen gas was fed so as to attain a predetermined molecular weight.

Next, the resultant powder was continuously drawn out from the homopolymerizer and then transferred to a similar random copolymerizer. As the second step, propylene and ethylene were fed to this random copolymerizer at a polymerization temperature of 55°C, and random copolymerization was then carried out under a pressure of 15 kg/cm²G. At this time, a feed ratio between propylene and ethylene was regulated so as to become a predetermined ethylene content. The powder was continuously drawn from the random copolymerizer, and then granulated.

### (5) Evaluation of polymer

For the propylene-ethylene block copolymer composition (PP-1) obtained in the above-mentioned (4), the items shown in Table 1 were measured in accordance with procedures described herein, and the measured results are also set forth in Table 1. Incidentally, MI of the homopolymer powder obtained in the first step was 20 g/10 min.

### Preparation Example 2

The same procedure as in Preparation Example 1-(4) was carried out except that the polymerization temperature in the first step was set to 85°C and the copolymerization temperature in the second step was set to 70°C and the feed of hydrogen was changed.

For the thus obtained propylene-ethylene block copolymer composition (PP-2), the items shown in Table 1 were measured in accordance with procedures described herein, and the measured results are also set forth in Table 1.

### Reference Examples 1 to 3

For commercially available propylene-ethylene block copolymer compositions (PPX-1 to 3), the items shown in Table 1 were measured in accordance with procedures described herein, and the measured results are also set forth in Table 1.
- PPX-1:: Made by Idemitsu Petrochemical Co., Ltd.
Trade name: Idemitsu Polypro J-750H
- PPX-2:: Made by Idemitsu Petrochemical Co., Ltd.
Trade name: Idemitsu Polypro J-785H
- PPX-3:: Made by Idemitsu Petrochemical Co., Ltd.
Trade name: Idemitsu Polypro J-950H

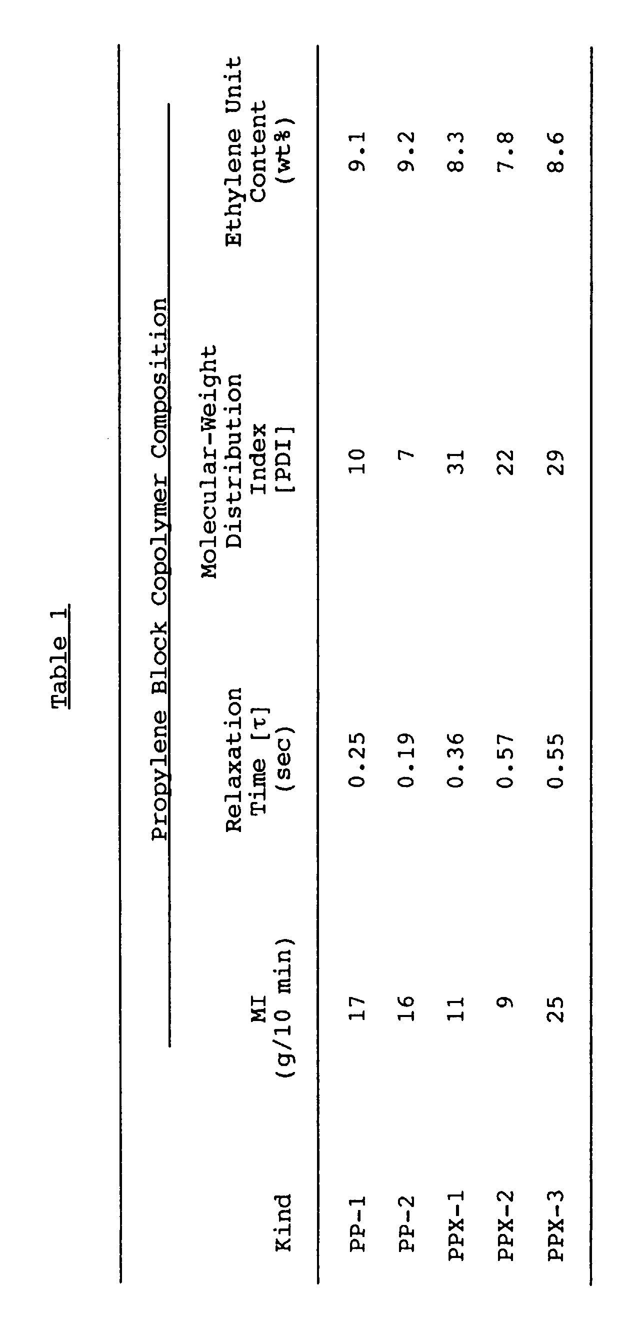

### Examples 1 to 9 and Comparative Examples 1 to 4

From some kinds of propylene block copolymer compositions shown in Table 2, molding materials having compositions shown in Table 2 were prepared, and installment panels (having embossed surfaces) for automobiles having a length of 1350 mm, a height of 300 mm, a width of 400 mm and a thickness of 3.5 mm were then molded under conditions of a resin temperature of 220°C, a mold temperature of 45°C and a molding cycle of 100 seconds by the use of an injection molding machine. In addition, test pieces were also prepared, and their physical properties were then evaluated.

For the test pieces, flexural modulus, Izod impact strength and glossiness on the embossed surface were measured in the following manners, and for the installment panels which were the molded articles, weld appearance and gloss unevenness were judged in the following manners. The results are shown in Table 3.
(1) Flexural modulus
   This was measured in accordance with JIS K-7203.
(2) Izod impact strength
   This was measured in accordance with JIS K-7110.
(3) Glossiness on embossed surface
   This was determined in accordance with JIS K-7105.
(4) Weld appearance
   This was visually evaluated on the basis of the following ranking.
   - ⓞ:: A weld on a weld formation position was not observed.
   - ○:: A weld on a weld formation position was scarcely observed.
   - Δ:: A weld on a weld formation position was slightly observed.
   - ×:: A weld on a weld formation position was clearly observed.
(5) Gloss unevenness
   This was judged in accordance with JIS K-7105.

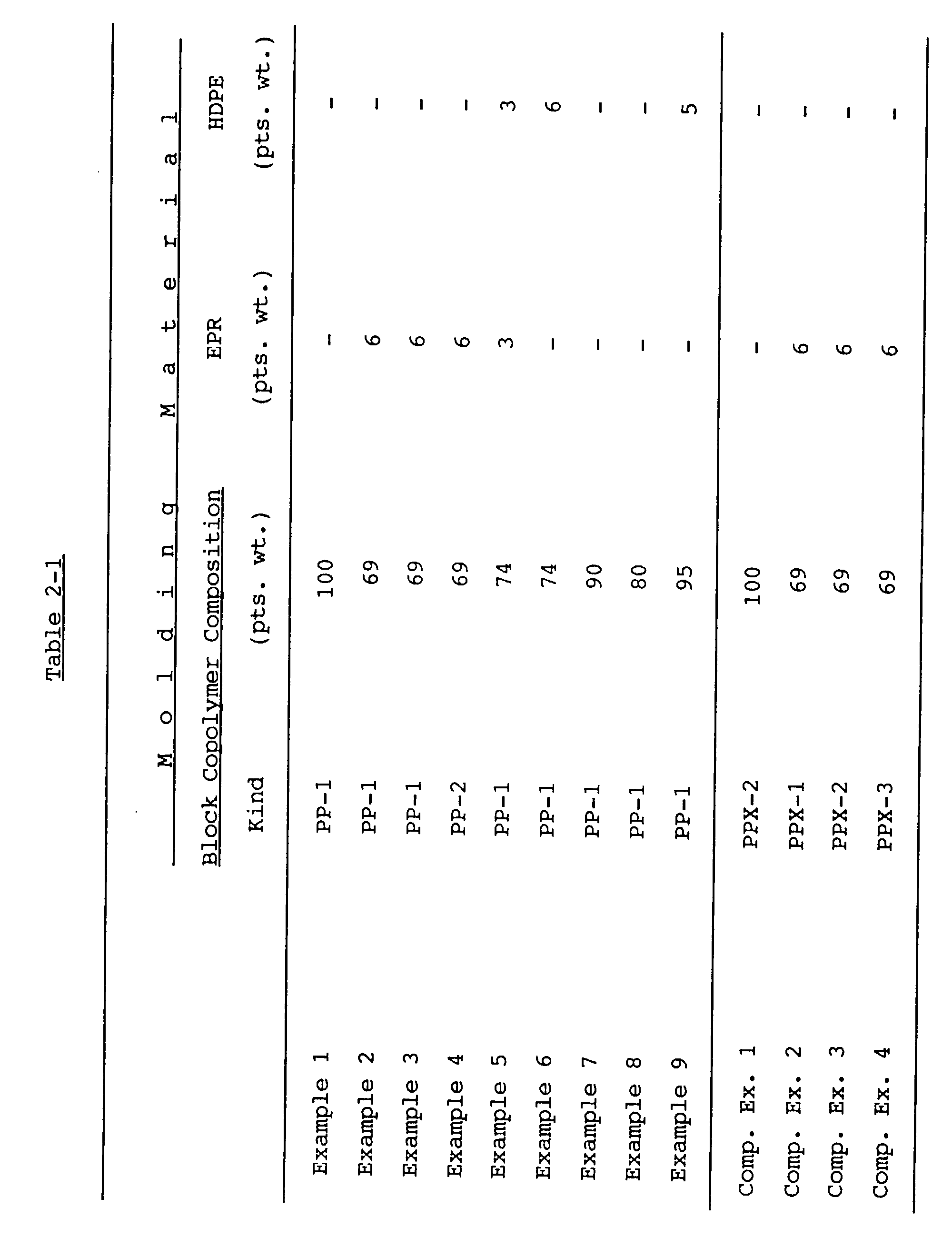

**Table 2-2**

| | Molding Material | | |
|---|---|---|---|
| | Talc | | Pigment |
| | Kind | (pts. wt.) | (pts. wt.) |
| Example 1 | - | - | 1.3 |
| Example 2 | A | 25 | 1.3 |
| Example 3 | B | 25 | 1.3 |
| Example 4 | A | 25 | 1.3 |
| Example 5 | A | 20 | 1.3 |
| Example 6 | A | 20 | 1.3 |
| Example 7 | A | 10 | 1.3 |
| Example 8 | A | 20 | 1.3 |
| Example 9 | - | - | 1.3 |
| Comp. Ex. 1 | - | - | 1.3 |
| Comp. Ex. 2 | B | 25 | 1.3 |
| Comp. Ex. 3 | A | 25 | 1.3 |
| Comp. Ex. 4 | B | 25 | 1.3 |
| (Notes) | | | |
| EPR: Ethylene-propylene rubber; made by Japan Synthetic Rubber Co., Ltd.; Trade name EP961SP; Mooney viscosity ML₁₊₄ (100°C): 63 Ethylene unit content: 68% by weight | | | |
| HDPE: High-density polyethylene; made by Idemitsu Petrochemical Co., Ltd.; Trade name 440M; MI (190°C, 2.16 kgf): 1 g/10 min | | | |
| Talc A: Product ground under pressure; average particle diameter: 3.75 µm; average aspect ratio: 6.5 | | | |
| Talc B: Product ground in gas stream; average particle diameter: 2.80 µm; average aspect ratio: 4.7 | | | |
| Pigment: Dark gray | | | |

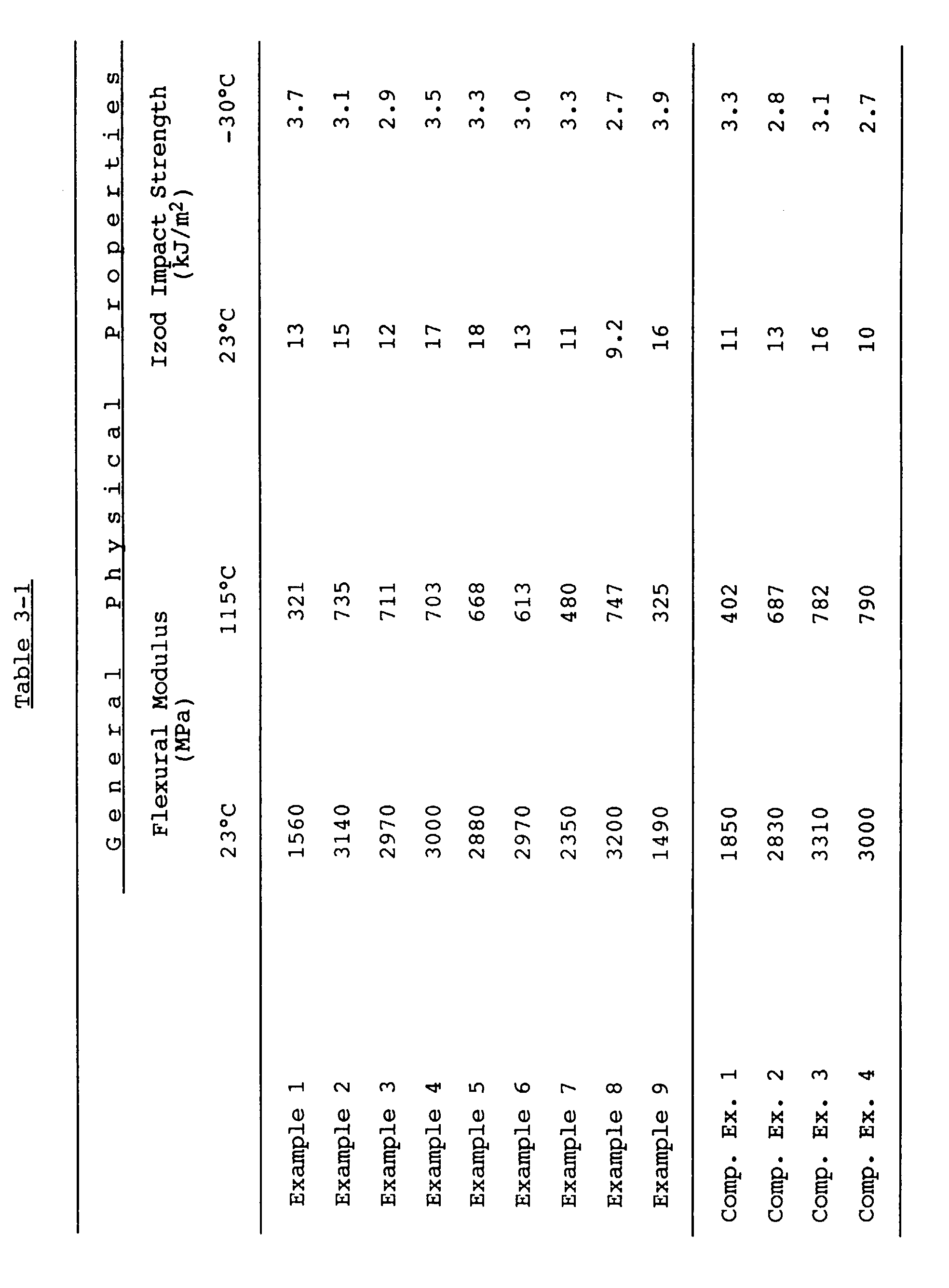

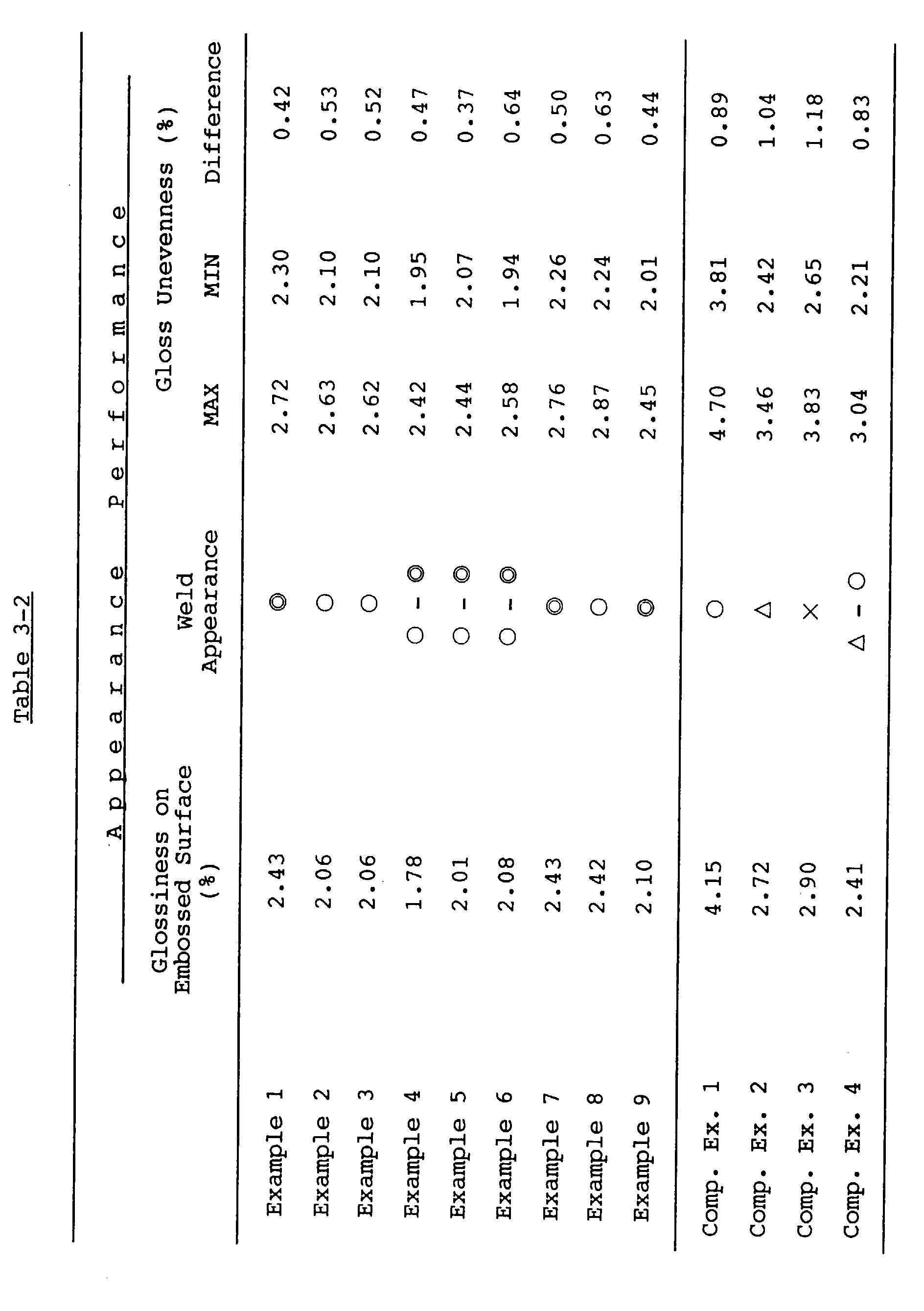

### Preparation Example 3

### (1) Preparation of magnesium compound

A 500-ℓ reactor equipped with a stirrer was fully purged with a nitrogen gas, and about 97.2 kg of ethanol, 460 g of iodine and 6.4 kg of metallic magnesium were then poured into the reactor. Afterward, reaction was carried out under reflux conditions with stirring until the generation of a hydrogen gas had not been observed any more to obtain a solid reaction product. Next, the reaction solution containing this solid reaction product was dried under reduced pressure, thereby obtaining a magnesium compound (a solid product).

### (2) Preparation of solid catalyst component

In a 500-ℓ reactor equipped with a stirrer which had been fully purged with a nitrogen gas were placed 30 kg of the magnesium compound (unground) obtained in the above-mentioned (1), 150 ℓ of purified heptane, 4.5 ℓ of silicon tetrachloride and 4.3 ℓ of diethyl phthalate. Afterward, the system was maintained at 90°C, and 144 ℓ of titanium tetrachloride was poured into the flask with stirring. Then, reaction was carried out at 110°C for 2 hours. The resultant solid component was separated, and then washed with purified heptane at 80°C. Furthermore, 228 ℓ of titanium tetrachloride was added, and reaction was then done at 110°C for 2 hours. Afterward, the reaction product was fully washed with purified heptane to obtain a solid catalyst component.

### (3) Pretreatment for polymerization

In a 500-ℓ reaction vessel equipped with a stirring blade was placed 230 ℓ of n-heptane, and 25 kg of the solid catalyst component obtained in the above-mentioned (2) was then added thereto. Next, triethylaluminum and cyclohexylmethyldimethoxysilane were added into the solution in ratios of 0.6 mol and 0.4 mol, respectively, with respect to 1 mol of titanium (Ti) in this solid catalyst component, and propylene was then introduced thereinto until a propylene partial pressure had reached 0.3 kg/cm³G, followed by reaction at 25°C for 4 hours. After the completion of the reaction, the solid catalyst component was washed with n-heptane several times, and carbon dioxide was then fed to the solution, followed by stirring for 24 hours.

### (4) Preparation of propylene-ethylene block copolymer composition (PP-3)

In the first step, the treated solid catalyst component of the above-mentioned (3), triethylaluminum and cyclohexylmethyldimethoxysilane were fed to a 200-ℓ polymerizer (homopolymerizer) equipped with a stirring blade at feed rates of 3 mmol/hr in terms of a Ti atom, 600 mmol/hr and 15 mmol/hr, respectively, and they were then reacted at a polymerization temperature of 80°C under a propylene pressure of 28 kg/cm²G. In this case, a hydrogen gas was fed so as to attain a predetermined molecular weight [a melt index (MI) was used as an indication].

Next, the resultant powder was continuously drawn out from the homopolymerizer and then transferred to a similar random copolymerizer. As the second step, propylene and ethylene were fed to this random copolymerizer at a polymerization temperature of 55°C, and random copolymerization was then carried out under a pressure of 15 kg/cm²G. At this time, a feed ratio between propylene and ethylene was regulated so as to become a predetermined ethylene content. The powder was continuously drawn from the random copolymerizer, and then pelletized to obtain pellets. The MI of the thus obtained pellets was 15 g/10 min. Incidentally, the MI of the powder of the homopolymer obtained in the first step was 22 g/10 min.

### (5) Evaluation of polymer

For the propylene-ethylene block copolymer composition (PP-3) obtained in the above-mentioned (4), the items shown in Table 4 were measured in accordance with procedures described herein, and the measured results are also set forth in Table 4.

### Preparation Examples 4 to 7

The same procedure as in Preparation Example 3-(4) was carried out except that polymerization conditions in Preparation Example 3-(4) were partially changed, thereby obtaining propylene-ethylene block copolymer compositions (PP-4 to 7). For these copolymer compositions, the items shown in Table 1 were measured in accordance with procedures described herein, and the measured results are also set forth in Table 1. Incidentally, the MIs of homopolymer powders obtained in the respective first steps of Preparation Examples 4 to 7 were 20 g/10 min, 30 g/10 min, 60 g/10 min and 60 g/10 min, respectively.

### Reference Examples 4 to 9

For commercially available propylene-ethylene block copolymer compositions (PPX-1 to 6), the items shown in Table 4 were measured in accordance with procedures described herein, and the measured results are also set forth in Table 4.
- PPX-1:: Made by Idemitsu Petrochemical Co., Ltd.
Trade name: Idemitsu Polypro J-750H
- PPX-2:: Made by Idemitsu Petrochemical Co., Ltd.
Trade name: Idemitsu Polypro J-785H
- PPX-3:: Made by Idemitsu Petrochemical Co., Ltd.
Trade name: Idemitsu Polypro J-950H
- PPX-4:: Made by Idemitsu Petrochemical Co., Ltd.
Trade name: Idemitsu Polypro J-3050H
- PPX-5:: Commercially available product
- PPX-6:: Commercially available product

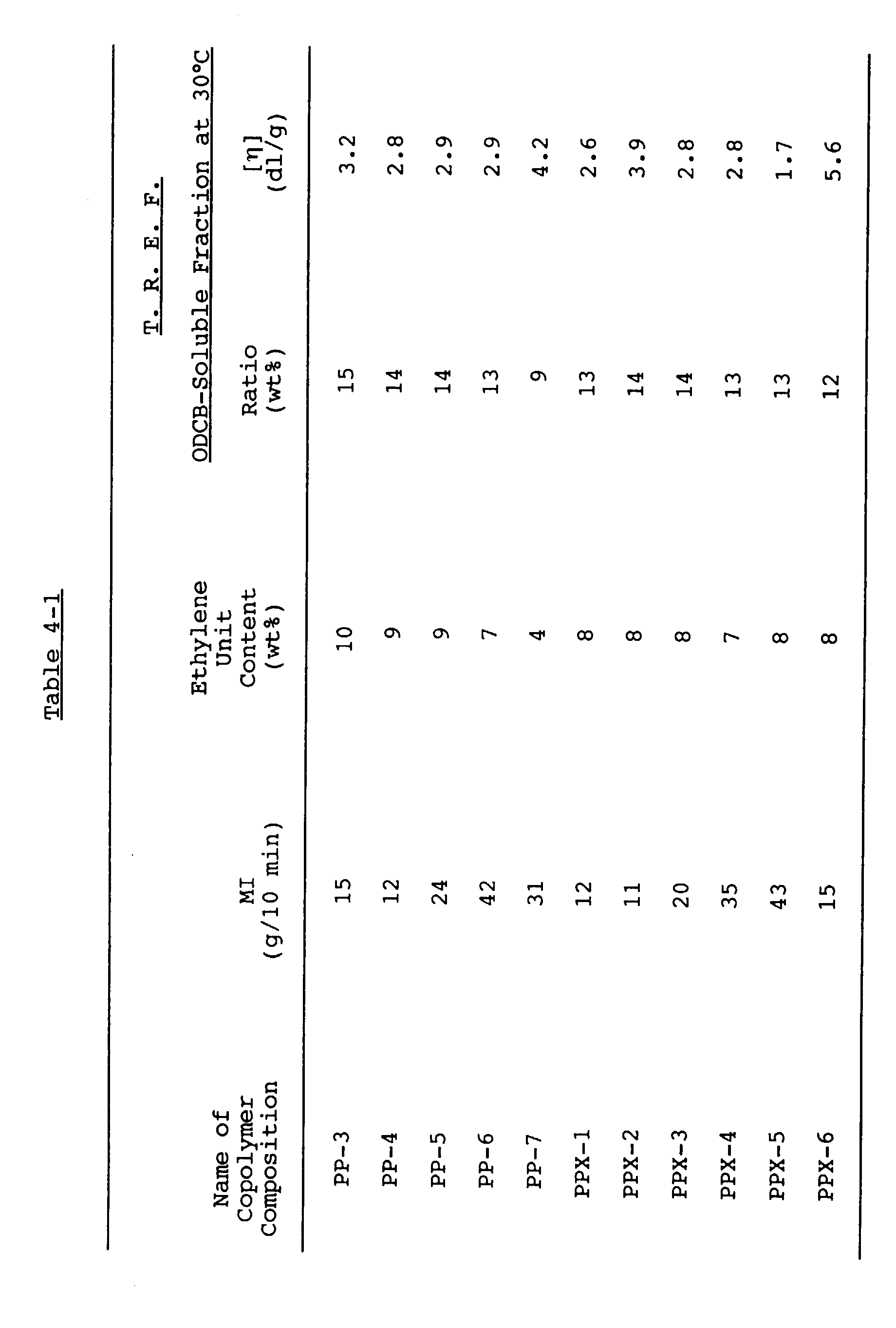

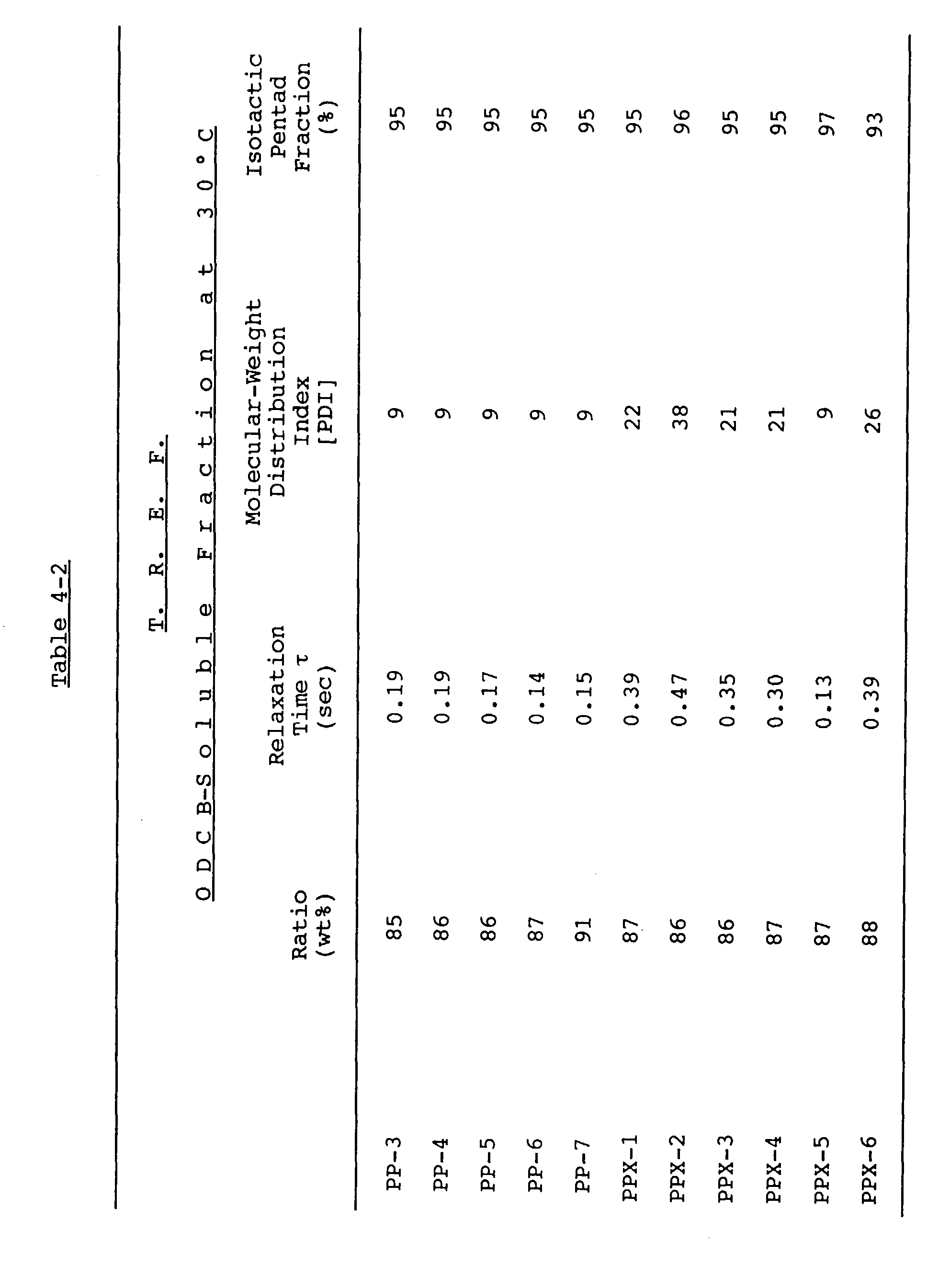

### Example 10 and Comparative Example 5

To 100 parts by weight of each of different kinds of propylene-ethylene block copolymer compositions shown in Table 5 was added 0.8 part by weight of a dark gray dry color, and the mixture was kneaded by a uniaxial extruder to prepare a molding material. Afterward, door trims (having embossed surfaces) for automobiles having a length of 1100 mm, a height of 600 mm and a thickness of 2.5 mm were then molded under conditions of a resin temperature of 220°C, a mold temperature of 45°C and a molding cycle of 100 seconds by the use of an injection molding machine. In addition, molded articles for appearance evaluation [refer to Fig. 1] and test pieces [75×75×3 mm] were also prepared, and their physical properties were then evaluated. The results of the evaluation are shown in Table 5.

### <Evaluation of test pieces>

(1) Flexural modulus (23°C)
   This was measured in accordance with JIS K-7203.
(2) Izod impact strength (23°C)
   This was measured in accordance with JIS K-7110.

### <Evaluation of molded articles for appearance evaluation>

(3) Glossiness of molded articles (embossed surfaces and plane surfaces)
   This was determined in accordance with JIS K-7105.
(4) Weld appearance (Evaluation of black lines on plane portions of molded articles)
   This was visually evaluated on the basis of the following ranking.
   - ⓞ:: A weld portion was not observed.
   - ○:: A weld portion was scarcely observed.
   - Δ:: A weld portion was slightly observed.
   - ×:: A weld portion was clearly observed.

### <Evaluation of door trims>

(5) Glossiness on embossed surface
   This was represented by an average of values at 3 positions obtained in accordance with JIS K-7105.
(6) Weld appearance
   This was visually observed, and a case where the weld was scarcely conspicuous even at a position having the relatively remarkable weld was evaluated as "successful", and a case where the weld was fairly conspicuous was evaluated as "unsuccessful".
(7) Flow mark
   This was visually observed, and a case where the flow mark was not observed was evaluated as "successful".

### Examples 11 to 14 and Comparative Examples 6 to 10

To 100 parts by weight of each of different kinds of propylene-ethylene block copolymer compositions shown in Table 5 was added 0.8 part by weight of a dark gray dry color, and the mixture was kneaded by a uniaxial extruder to prepare a molding material. Afterward, molded articles for appearance evaluation (Fig. 1) were prepared in the same manner as in Example 10, and the glossiness and weld appearance of these molded articles were evaluated. The results are shown in Table 5.

### Example 15 and Comparative Example 11

To 100 parts by weight of a mixture of 80% by weight of each of different kinds of propylene-ethylene block copolymer compositions shown in Table 5 and 20% by weight of talc [average particle diameter: 3.5 µm (a laser method), average aspect ratio: 5] was added 0.8 part by weight of a dark gray dry color, and the mixture was then kneaded by a uniaxial extruder to prepare a molding material. Next, molded articles for appearance evaluation (Fig. 1) were prepared in the same manner as in Example 10, and the glossiness and weld appearance of these molded articles were evaluated. The results are shown in Table 5.

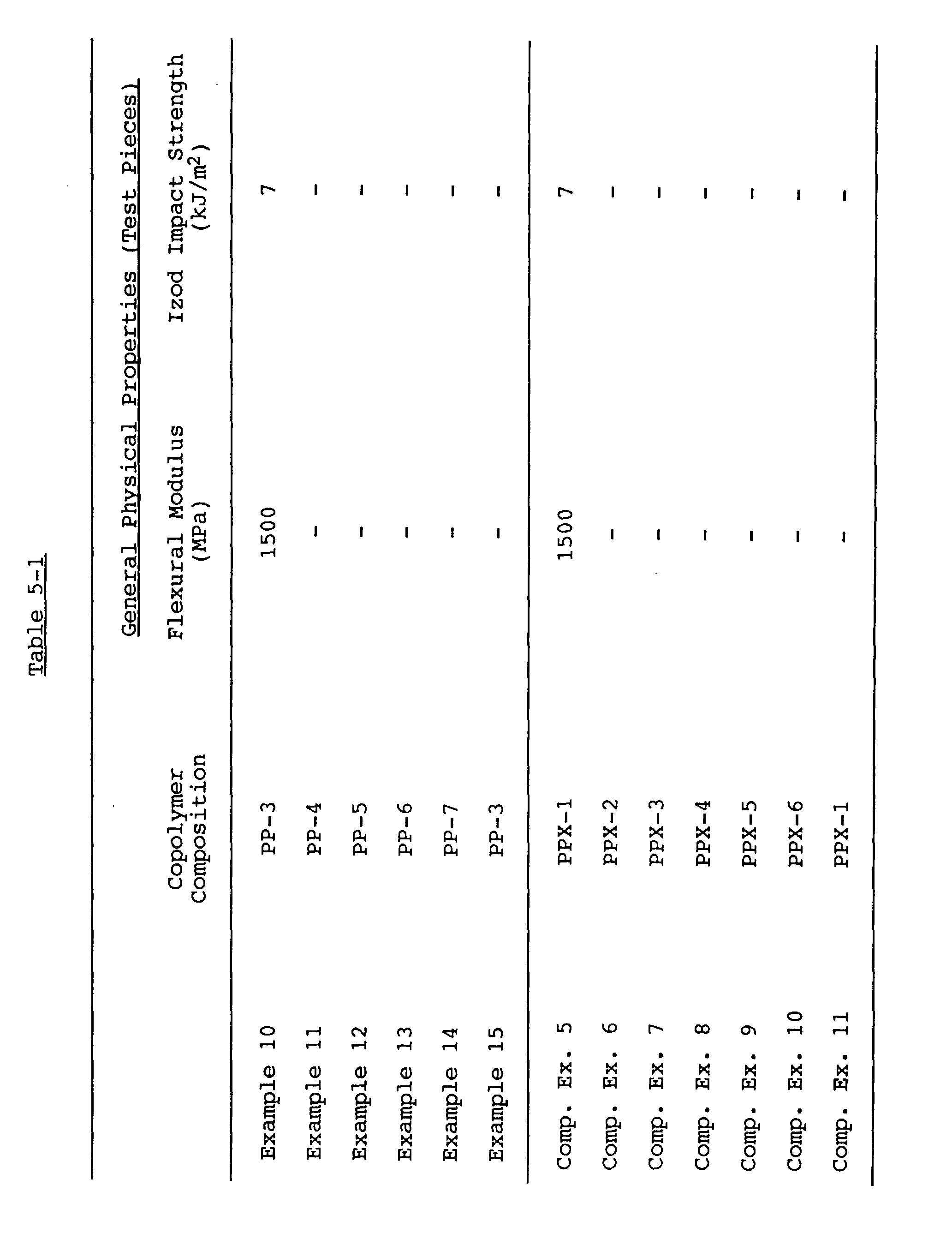

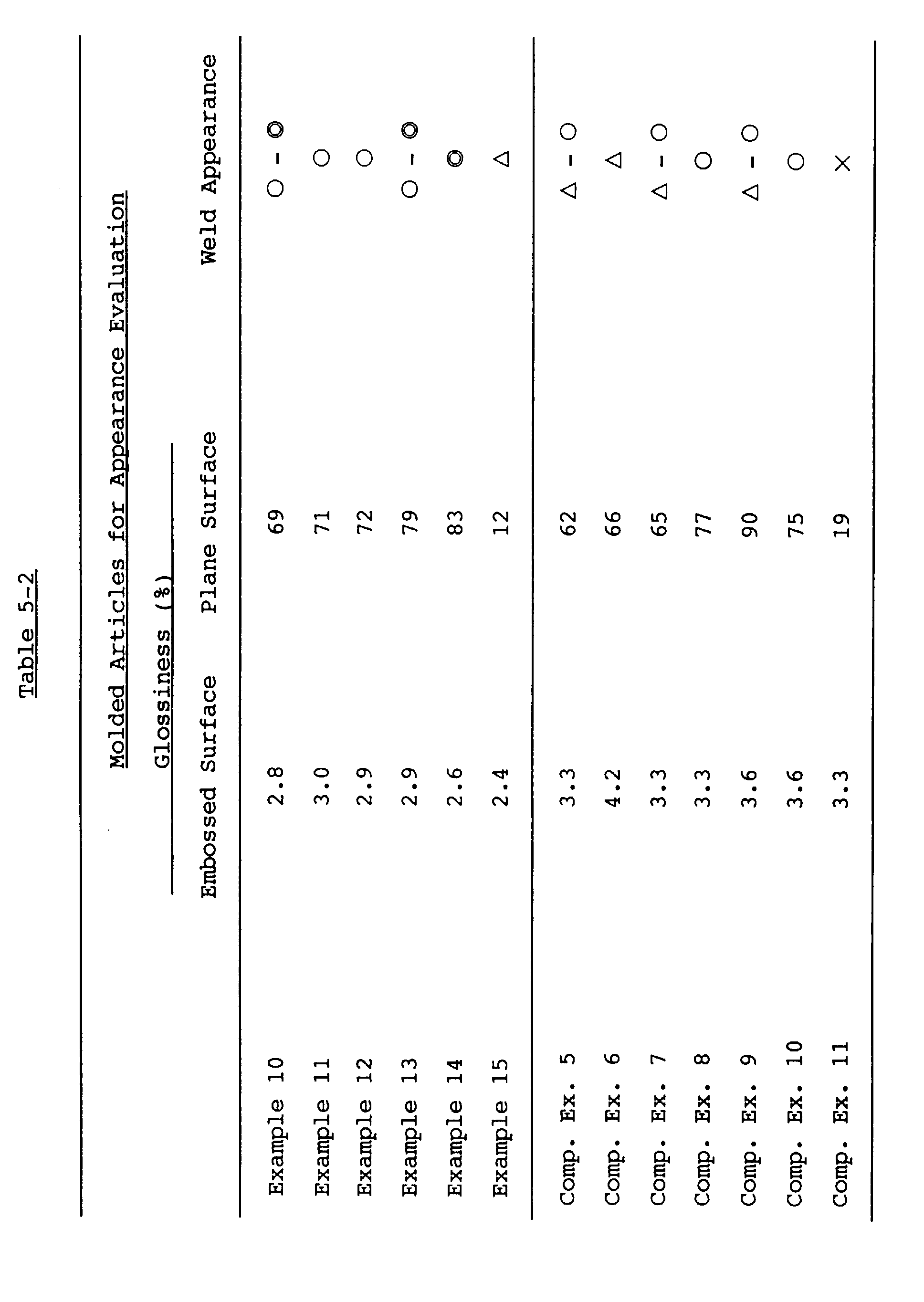

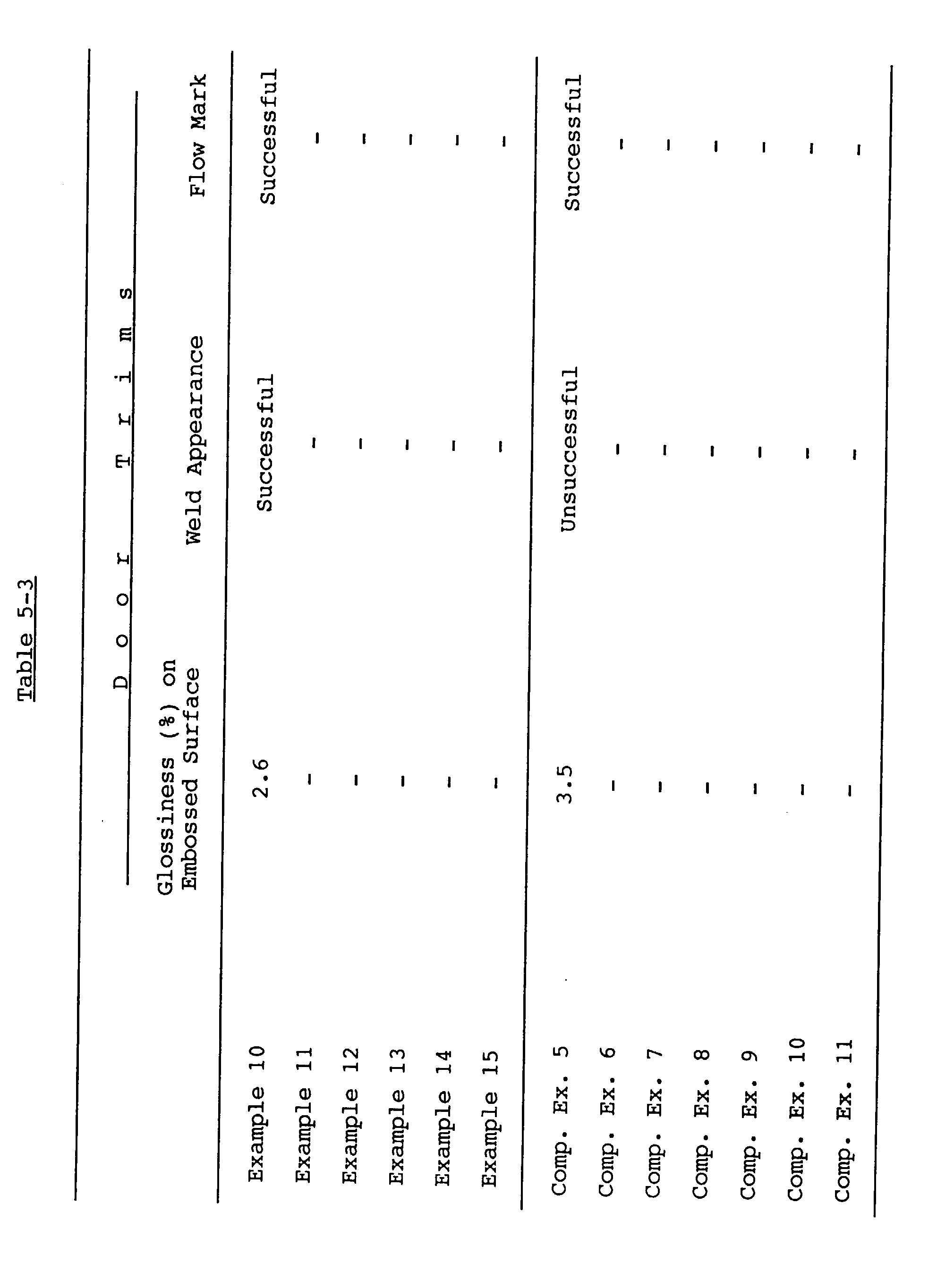

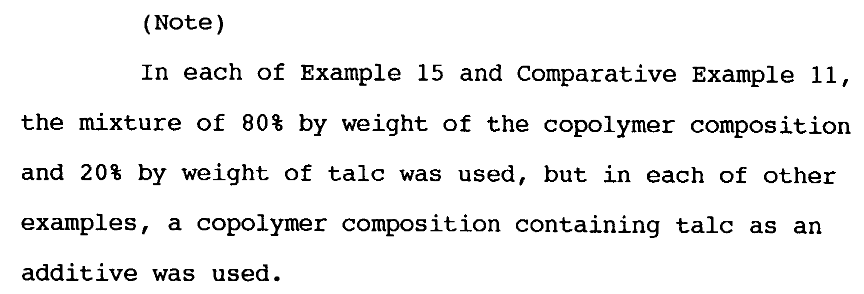

### Preparation Example 8

### (1) Preparation of propylene-ethylene block copolymer composition (PP-8)

By all the same procedure as in Preparation Example 3, a propylene-ethylene block copolymer composition (PP-8) was prepared. The MI of this composition was 15 g/10 min. Incidentally, the MI of a homopolymer powder obtained in the first step was 22 g/10 min.

### (2) Preparation of crystalline propylene polymer-containing composition

With 95 parts by weight of a propylene-ethylene block copolymer composition (PP-8) obtained in the above-mentioned (1) was blended 5 parts by weight of EPR [an ethylene-propylene copolymer elastomer; propylene unit content: 23% by weight; MI: 0.8 g/10 min (230°C, 2.16 kgf)] to prepare a crystalline propylene polymer-containing composition. For this product, the items shown in Table 6 were measured in accordance with procedures described herein, and the measured results are also set forth in Table 6.

### Preparation Examples 9 to 12

The same procedure as in Preparation Example 3-(4) was carried out except that polymerization conditions in Preparation Example 3-(4) were partially changed, thereby obtaining propylene-ethylene block copolymer compositions (PP-9 to 12). The MIs of the respective copolymer compositions were as follows.
- PP-9:: 12 g/10 min (20 g/10 min)
- PP-10:: 24 g/10 min (30 g/10 min)
- PP-11:: 42 g/10 min (60 g/10 min)
- PP-12:: 31 g/10 min (50 g/10 min)

In the foregoing paragraph, the values in the parentheses are the MIs of homopolymer powders obtained in the first steps.

With 95 parts by weight of each of the thus obtained propylene-ethylene block copolymer compositions (PP-9 to 12) was blended 5 parts by weight of EPR (referred to above) or HDPE [a high-density polyethylene; density: 0.968 g/cm³; MI: 5.3 g/10 min (190°C, 2.16 kgf)] as shown in Table 6 to prepare crystalline propylene polymer-containing compositions.

For these products, the items shown in Table 6 were measured in accordance with procedures described herein, and the measured results are also set forth in Table 6.

### Comparative Examples 1 to 6

Crystalline propylene polymer-containing compositions were prepared from commercially available propylene-ethylene block copolymer compositions (PPX-1 to 6), EPR (referred to above) and HDPE (referred to above) in ratios shown in Table 6.

For these products, the items shown in Table 6 were measured in accordance with procedures described herein, and the measured results are set forth in Table 6.
- PPX-1:: Made by Idemitsu Petrochemical Co., Ltd.
Trade name: Idemitsu Polypro J-750H
- PPX-2:: Made by Idemitsu Petrochemical Co., Ltd.
Trade name: Idemitsu Polypro J-785H
- PPX-3:: Made by Idemitsu Petrochemical Co., Ltd.
Trade name: Idemitsu Polypro J-950H
- PPX-4:: Made by Idemitsu Petrochemical Co., Ltd.
Trade name: Idemitsu Polypro J-3050H
- PPX-5:: Commercially available product
- PPX-6:: Commercially available product

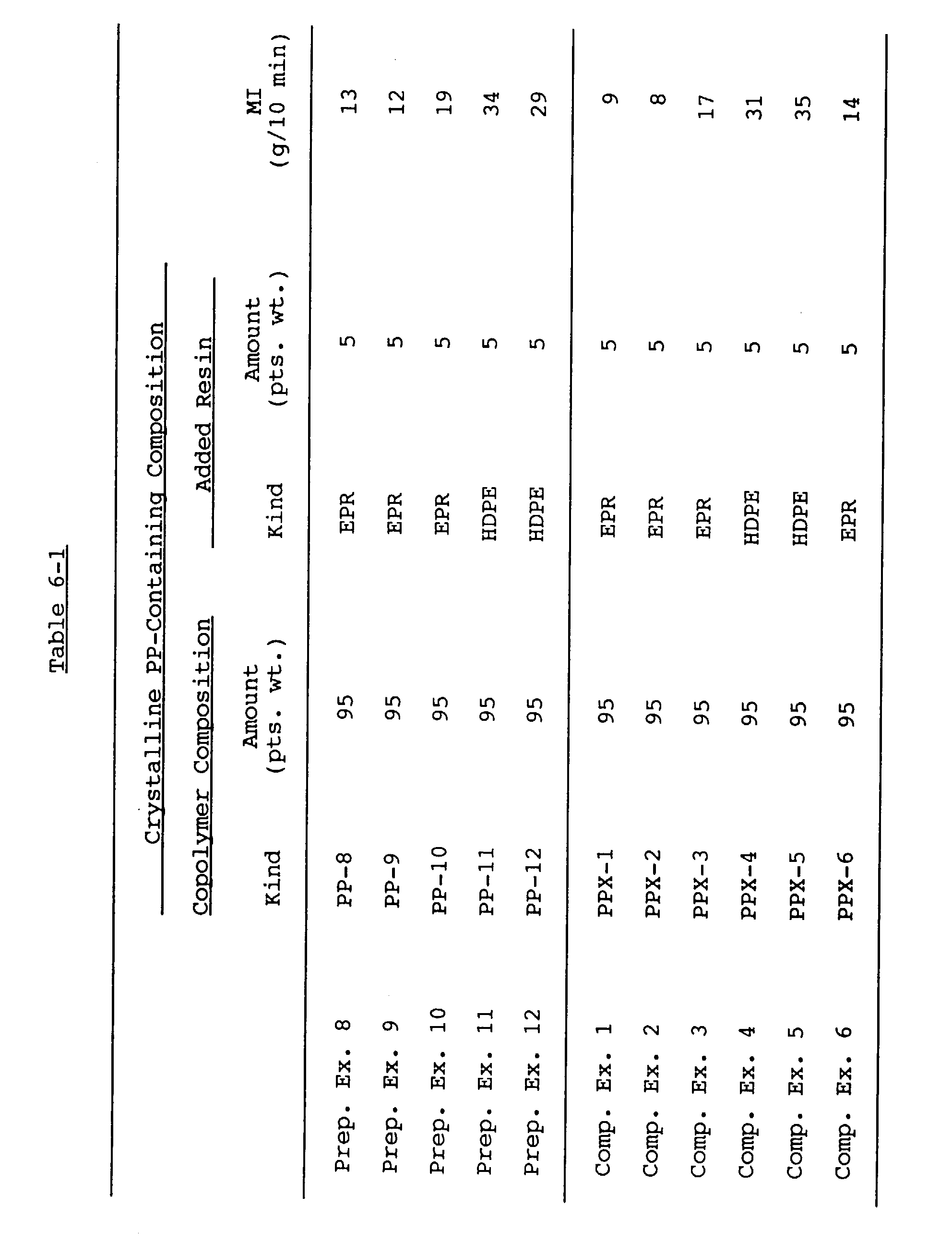

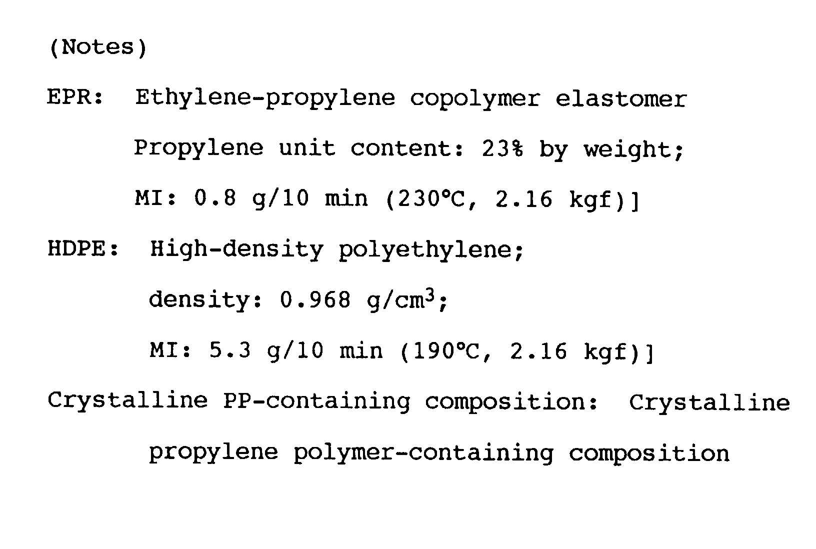

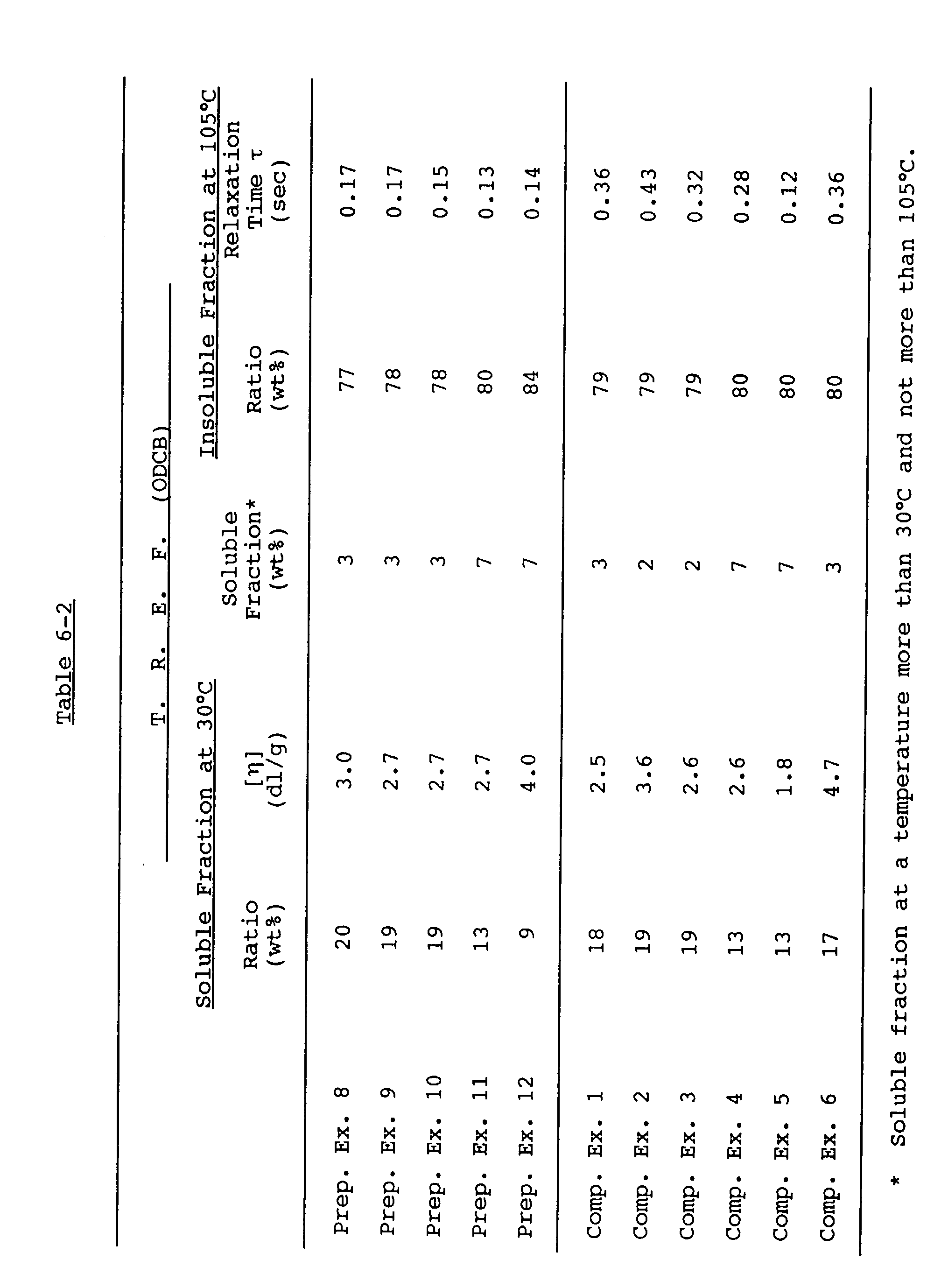

**Table 6-3**

| | T. R. E. F. (ODCB) | |
|---|---|---|
| | Insoluble Fraction at 105°C | |
| | Molecular-weight Distribution Index [PDI] | Isotactic Pentad Fraction (%) |
| Prep. Ex. 8 | 8 | 95 |
| Prep. Ex. 9 | 9 | 95 |
| Prep. Ex. 10 | 8 | 95 |
| Prep. Ex. 11 | 9 | 95 |
| Prep. Ex. 12 | 8 | 95 |
| Comp. Ex. 1 | 21 | 95 |
| Comp. Ex. 2 | 36 | 96 |
| Comp. Ex. 3 | 21 | 95 |
| Comp. Ex. 4 | 20 | 95 |
| Comp. Ex. 5 | 8 | 96 |
| Comp. Ex. 6 | 25 | 93 |

### Example 16

To 100 parts by weight of the crystalline propylene polymer-containing composition obtained in Preparation Example 8 were added 30 parts by weight of talc ([average particle diameter: 3.5 µm (a laser method), average aspect ratio: 5], and the mixture was then kneaded by a twin-screw extruder (2FCM) to prepare a molding material. Next, installment panels (having embossed surfaces) for automobiles having a length of 1350 mm, a height of 300 mm, a width of 400 mm and a thickness of 3.5 mm were then molded under conditions of a resin temperature of 220°C, a mold temperature of 45°C and a molding cycle of 100 seconds by the use of an injection molding machine. In addition, molded articles for appearance evaluation (Fig. 1) and test pieces (75×75×3 mm) were also prepared, and their physical properties were then evaluated by the following procedures. The results are shown in Table 7.

### [Evaluation of test pieces]

(1) Flexural modulus (23°C)
   This was measured in accordance with JIS K-7203.
(2) Izod impact strength (23°C)
   This was measured in accordance with JIS K-7110.
(3) Du Pont impact value (-30°C)
   Test pieces: Plates of 75×75×3 mm

### [Evaluation of molded articles for appearance evaluation]

(4) Glossiness of molded articles (embossed surfaces and plane surfaces)
   This was determined in accordance with JIS K-7105.
(5) Weld appearance (Evaluation of black lines on plane portions of molded articles)
   This was visually evaluated on the basis of the following ranking.
   - ⓞ:: A weld position was not observed.
   - ○:: A weld position was scarcely observed.
   - Δ:: A weld position was slightly observed.
   - ×:: A weld position was clearly observed.

### [Evaluation of installment panels]

(6) Glossiness on embossed surface
   This was represented by an average of values at 3 positions obtained in accordance with JIS K-7105.
(7) Weld appearance
   This was visually observed, and a case where the weld was scarcely conspicuous even at a position having the relatively remarkable weld was evaluated as "successful", and a case where the weld was fairly conspicuous was evaluated as "unsuccessful".
(8) Flow mark
   This was visually observed, and a case where the flow mark was not observed was evaluated as "successful".

### Examples 17 to 20 and Comparative Examples 12 to 17

Molding materials were prepared from crystalline propylene polymer-containing compositions shown in Table 7 and talc by the same procedure as in Example 16, and molded articles for appearance evaluation were then formed. Afterward, the glossiness and weld appearance of the molded articles were evaluated.

Furthermore, in Comparative Example 13, molded articles for appearance evaluation were formed, and installment panels (having embossed surfaces) for automobiles and test pieces (75×75×3 mm) were also prepared in the same manner as in Example 16, and their physical properties were also evaluated. The results are shown in Table 7.

### Example 21 and Comparative Example 18

Molded articles for appearance evaluation were formed by the use of crystalline propylene polymer-containing compositions alone shown in Table 7 (no addition of talc) in the same manner as in Example 16, and the glossiness and weld appearance of the molded articles were evaluated. The results are shown in Table 7.

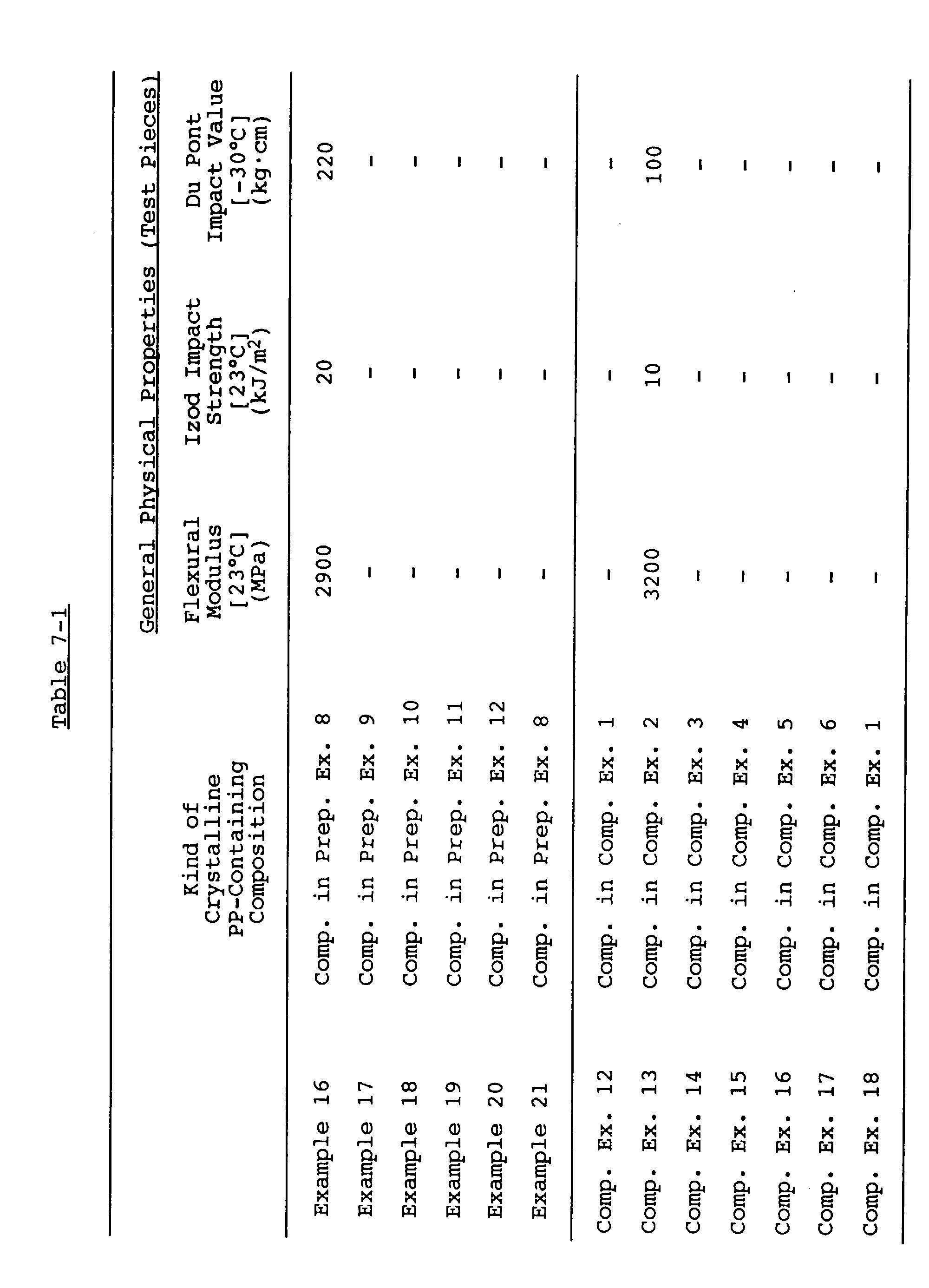

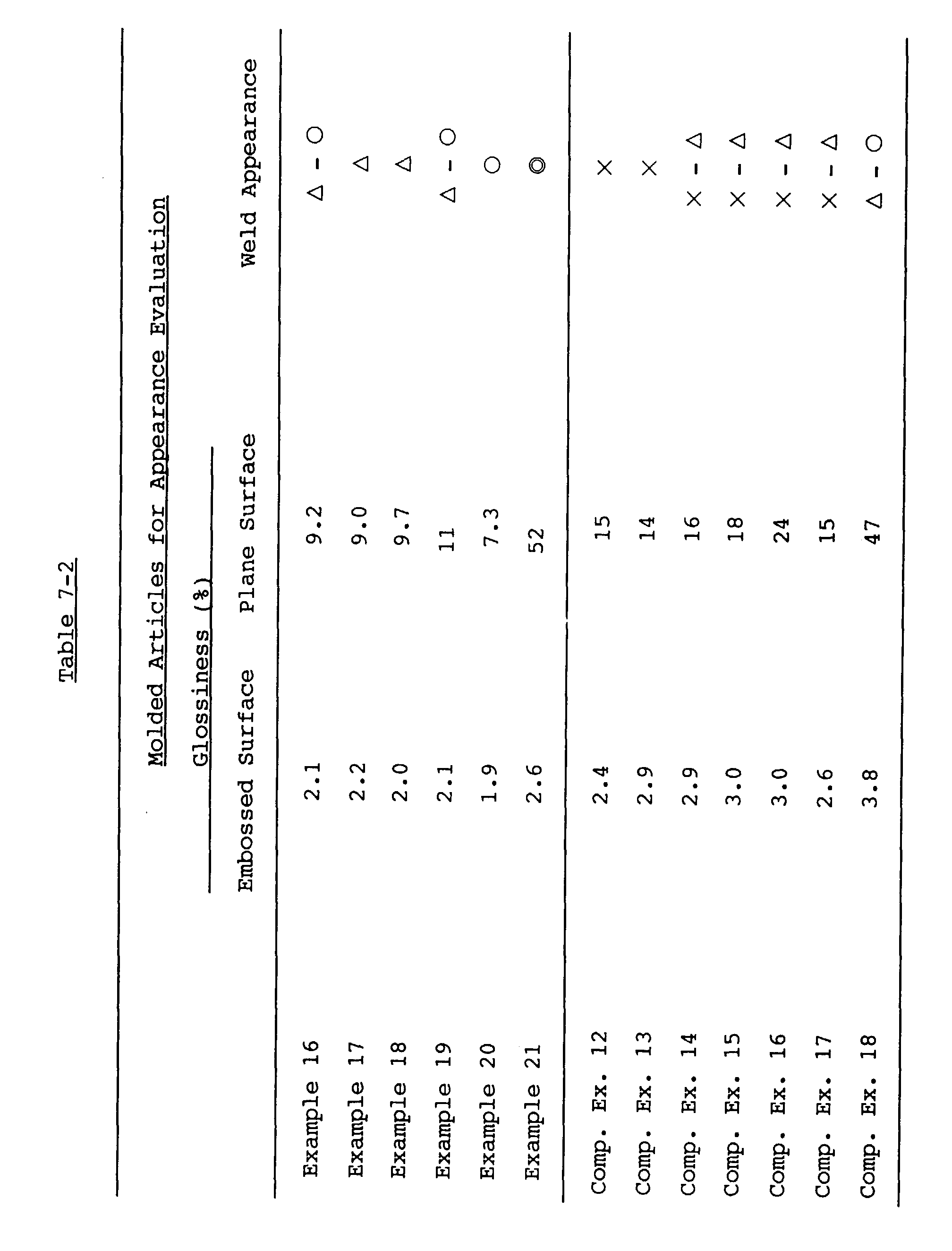

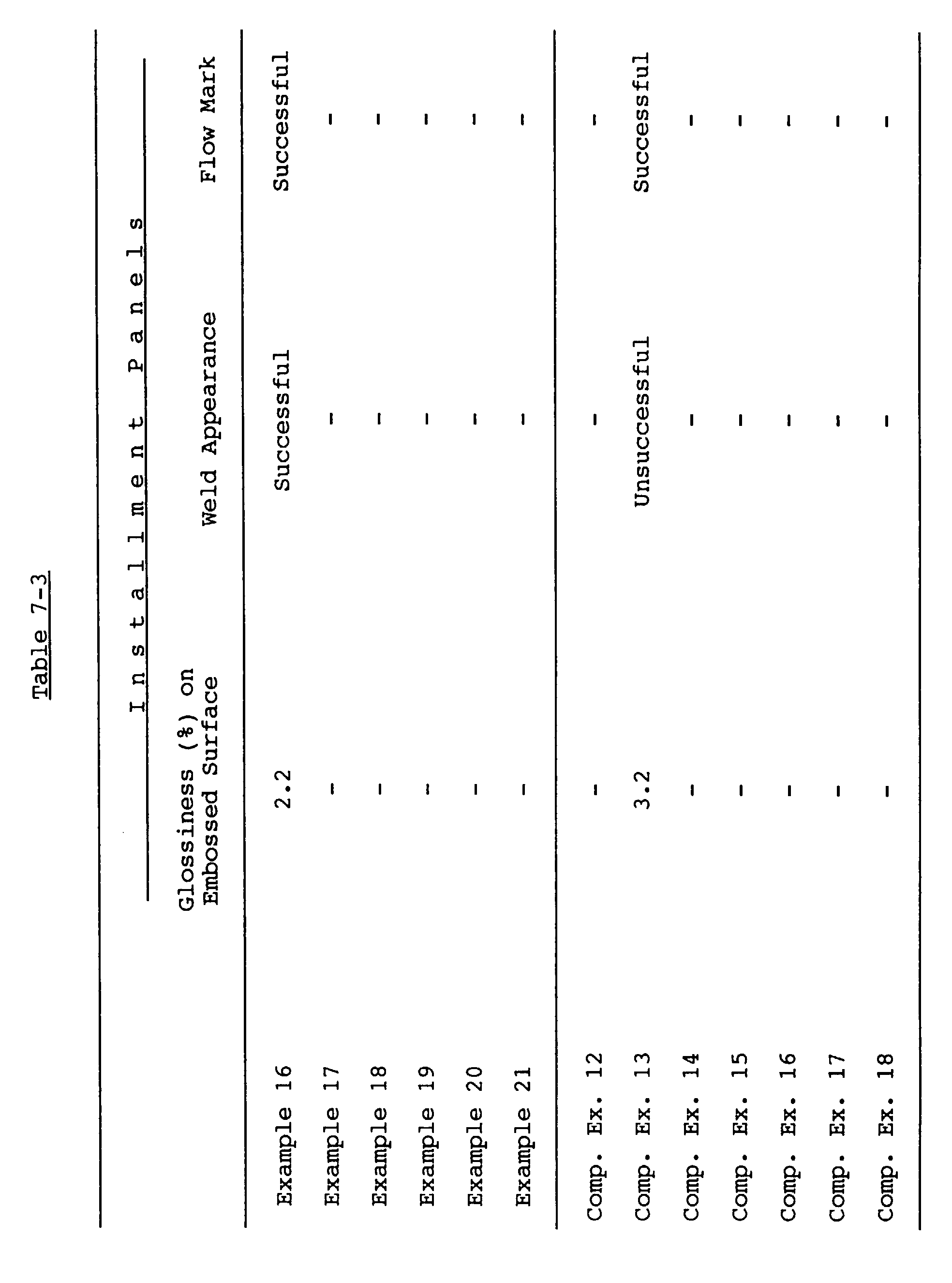

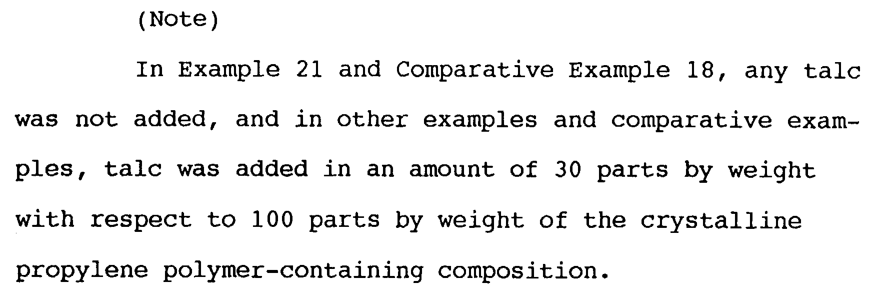

### Possibility of Industrial Utilization

A crystalline propylene polymer-containing composition and a propylene resin composition for automotive interior parts of the present invention can be used for the manufacture of automotive interior parts as a molding material having a good weld appearance, a less gloss unevenness, a good appearance performance and a low glossiness and permitting non-coating, or as a molding material having an excellent balance between impact resistance and stiffness in addition to the above-mentioned characteristics.

Furthermore, the automotive interior parts of the present invention obtained by injection molding the compositions have the above-mentioned excellent characteristics, and so they are particularly desirable as embossed installment panels, console boxes and trims.

## Claims

1. A crystalline propylene polymer-containing composition for automotive interior parts in which (i) a melt index is in the range of 1 to 100 g/10 min, and (ii) a relaxation time (τ) obtained from melt viscoelasticity measurement is 0.35 second or less at an angular frequency ω of 10°/sec.

2. The crystalline propylene polymer-containing composition for automotive interior parts according to Claim 1 wherein the relaxation time (τ) is in the range of 0.01 to 0.35 second.

3. A crystalline propylene polymer-containing composition for automotive interior parts in which (i) a melt index is in the range of 1 to 100 g/10 min, (ii) a relaxation time (τ) obtained from melt viscoelasticity measurement is in the range of 0.01 to 0.35 second at an angular frequency ω of 10⁰/sec, and (iii) a molecular-weight distribution index (PDI) represented by ω₂/10ω₁ is in the range of 1 to 25 wherein ω₁ is an angular frequency at which a storage modulus (G') obtained from the melt viscoelasticity measurement is 2×10² Pa and ω₂ is an angular frequency at which the storage modulus (G') is 2×10⁴ Pa.

4. A propylene resin composition for automotive interior parts which comprises 100 parts by weight of the crystalline propylene polymer-containing composition described in Claim 1 or 3 and 0.5 to 50 parts by weight of at least one selected from other thermoplastic resins and rubbery polymers.

5. A propylene resin composition for automotive interior parts which comprises 100 parts by weight of the crystalline propylene polymer-containing composition described in Claim 1 or 3 and 1 to 100 parts by weight of at least one selected from inorganic fillers and organic fillers.

6. A propylene resin composition for automotive interior parts which comprises 100 parts by weight of the propylene resin composition described in Claim 4 and 1 to 100 parts by weight of at least one selected from inorganic fillers and organic fillers.

7. A propylene-ethylene block copolymer composition for automotive interior parts which (i) can be fractionated into (a) an o-dichlorobenzene-soluble fraction at 30°C and (b) an o-dichlorobenzene-insoluble fraction at 30°C by a temperature rising elution fractionation using o-dichlorobenzene and in which an intrinsic viscosity [η] (in decalin at 135°C) of the component (a) is in the range of 2.0 to 10 dl/g; a relaxation time τ of the component (b) obtained from melt viscoelasticity measurement is in the range of 0.01 to 0.35 second at an angular frequency ω of 10°/sec; a molecular-weight distribution index (PDI) of the component (b) represented by ω₂/10ω₁ is in the range of 1 to 18 wherein ω₁ is an angular frequency at which a storage modulus (G') obtained from the melt viscoelasticity measurement is 2×10² Pa and ω₂ is an angular frequency at which the storage modulus (G') is 2×10⁴ Pa; and an isotactic pentad fraction of the component (b) is 95% or more; and (ii) an ethylene unit content is in the range of 3 to 24% by weight.

8. The propylene-ethylene block copolymer composition for automotive interior parts according to Claim 7 wherein the amount of the component (a) is in the range of 3 to 40% by weight and the amount of the component (b) is in the range of 97 to 60% by weight according to the temperature rising elution fractionation using o-dichlorobenzene.

9. A propylene resin composition for automotive interior parts which comprises 100 parts by weight of the propylene-ethylene block copolymer composition described in Claim 7 and 1 to 100 parts by weight of an inorganic filler.

10. A crystalline propylene polymer-containing composition for automotive interior parts which can be fractionated into (x) an o-dichlorobenzene-soluble fraction at 30°C, (y) an o-dichlorobenzene-soluble fraction at a temperature more than 30°C and not more than 105°C and (z) an o-dichlorobenzene-insoluble fraction at 105°C by a temperature rising elution fractionation using o-dichlorobenzene and in which (i) an intrinsic viscosity [η] (in decalin at 135°C) of the component (x) is in the range of 2.0 to 10 dl/g; (ii) a relaxation time τ of the component (z) obtained from melt viscoelasticity measurement is in the range of 0.01 to 0.35 second at an angular frequency ω of 10°/sec; a molecular-weight distribution index (PDI) of the component (z) represented by ω₂/10ω₁ is in the range of 1 to 18 wherein ω₁ is an angular frequency at which a storage modulus (G') obtained from the melt viscoelasticity measurement is 2×10² Pa and ω₂ is an angular frequency at which the storage modulus (G') is 2×10⁴ Pa; (iii) a weight ratio of the amount of the component (y)/[the amount of the component (y) + the amount of the component (z)] is in the range of 0 to 0.20; and (iv) a weight ratio of the amount of the component (x)/[the amount of the component (x) + the amount of the component (y) + the amount of the component (z)] is in the range of 0.03 to 0.35.

11. The crystalline propylene polymer-containing composition according to Claim 10 which is a propylene-ethylene block copolymer composition.

12. The crystalline propylene polymer-containing composition according to Claim 10 which comprises 100 parts by weight of a crystalline propylene resin, a propylene-ethylene block copolymer composition or a mixture thereof and 0.1 to 50 parts by weight of at least one selected from thermoplastic elastomers and polyethylene resins.

13. A propylene resin composition for automotive interior parts which comprises 100 parts by weight of the crystalline propylene polymer-containing composition described in Claim 10 and 1 to 100 parts by weight of an inorganic filler.

14. An automotive interior part obtained by injection molding the crystalline propylene polymer-containing composition described in Claim 1.

15. An automotive interior part obtained by injection molding the crystalline propylene polymer-containing composition described in Claim 3.

16. An automotive interior part obtained by injection molding the propylene resin composition described in Claim 4.

17. An automotive interior part obtained by injection molding the propylene resin composition described in Claim 5.

18. An automotive interior part obtained by injection molding the propylene resin composition described in Claim 6.

19. An automotive interior part obtained by injection molding the propylene-ethylene block copolymer composition described in Claim 7.

20. An automotive interior part obtained by injection molding the propylene resin composition described in Claim 9.

21. An automotive interior part obtained by injection molding the crystalline propylene polymer-containing composition described in Claim 10.

22. An automotive interior part obtained by injection molding the propylene resin composition described in Claim 13.

23. The automotive interior part according to any one of Claims 14 to 22 which is an installment panel, a console box or a trim.

## Patentansprüche

1. Zusammensetzung für Kraftfahrzeuginnenteile, die ein kristallines Propylenpolymer enthält, worin (i) der Schmelzindex im Bereich von 1 bis 100 g/min liegt und (ii) die Relaxationszeit (τ), erhalten aus der Schmelzviskoelastizitätsmessung 0,35 Sekunden oder weniger bei einer Winkelfrequenz ω von 10⁰/sek. beträgt.

2. Zusammensetzung für Kraftfahrzeuginnenteile, die ein kristallines Propylenpolymer enthält, nach Anspruch 1, worin die Relaxationszeit (τ) im Bereich von 0,01 bis 0,35 Sekunden liegt.

3. Zusammensetzung für Kraftfahrzeuginnenteile, die ein kristallines Propylenpolymer enthält, worin (i) der Schmelzindex im Bereich von 1 bis 100 g/min liegt, (ii) die Relaxationszeit (τ), erhalten aus der Schmelzviskoelastizitätsmessung, bei einer Winkel frequenz ω von 10⁰/sek. im Bereich von 0,01 bis 0,35 Sekunden liegt und (iii) der Molekulargewichtsverteilungsindex (PDI), dargestellt durch ω₂/10ω₁ im Bereich von 1 bis 25 liegt, worin ω₁ die Winkel frequenz ist, bei der das Speichermodul (G'), erhalten aus einer Schmelzviskoelastizitätsmessung, 2 x 10² Pa beträgt, und ω₂ die Winkelfequenz ist, bei der das Speichermodul (G`) 2 x 10⁴ Pa ist.

4. Propylenharz-Zusammensetzung für Kraftfahrzeuginnenteile, die 100 Gewichtsteile einer Zusammensetzung, die ein kristallines Propylenpolymer enthält, nach Anspruch 1 oder 3 und 0,5 bis 50 Gewichtsteile mindestens eines Bestandteils, ausgewählt aus anderen thermoplastischen Harzen und kautschukartigen Elastomeren, umfaßt.

5. Propylenharz-Zusammensetzung für Kraftfahrzeuginnenteile, die 100 Gewichtsteile einer Zusammensetzung, die ein kristallines Propylenpolymer enthält, nach Anspruch 1 oder 3 und 1 bis 100 Gewichtsteile mindestens eines Bestandteils, ausgewählt aus anorganischen Füllstoffen und organischen Füllstoffen, umfaßt.

6. Proplyenharz-Zusammensetzung für Kraftfahrzeuginnenteile, die 100 Gewichtsteile einer Propylenharz-Zusammensetzung nach Anspruch 4 und 1 bis 100 Gewichtsteile mindestens eines Bestandteils umfaßt, der aus anorganischen Füllstoffen und organischen Füllstoffen ausgewählt wird.

7. Propylen-Ethylen-Blockcopolymer-Zusammensetzung für Kraftfahrzeuginnenteile, die (i) in (a) eine o-Dichlorbenzollösliche Fraktion bei 30°C und (b) eine o-Dichlorbenzolunlösliche Fraktion bei 30°C durch eine Temperaturanstiegselutionsfraktionierung unter Verwendung von o-Dichlorbenzol fraktioniert werden kann, und worin die intrinsische Viskosität [η] (in Decalin bei 135°C) der Komponente (a) im Bereich von 2,0 bis 10 dl/g liegt; die Relaxationszeit τ der Komponente (b), erhalten aus einer Schmelzviskoelastizitätsmessung, im Bereich von 0,01 bis 0,35 Sekunden bei einer Winkelfrequenz ω von 10⁰/sek. liegt; der Molekulargewichtsverteilungsindex (PDI) der Komponente (b), dargestellt durch ω₂/10ω₁ im Bereich von 1 bis 18 liegt, worin ω₁ die Winkel frequenz ist, bei der das Speichermodul (G'), erhalten aus einer Schmelzviskoelastizitätsmessung, 2 x 10² Pa ist und ω₂ die Winkelfrequenz ist, bei der das Speichermodul (G`) 2 x 10⁴ Pa ist; und der isotaktische Pentadenanteil der Komponente (b) 95 % oder mehr beträgt und (ii) der Ethyleneinheitengehalt im Bereich von 3 bis 24 Gew.-% liegt.

8. Propylen-Ethylen-Blockcopolymer-Zusammensetzung für Kraftfahrzeuginnenteile nach Anspruch 7, worin die Menge der Komponente (a) im Bereich von 3 bis 40 Gew.-% liegt, und die Menge der Komponente (b) im Bereich von 97 bis 60 Gew.-% liegt, gemäß der Temperaturanstiegselutionsfraktionierung unter Verwendung von o-Dichlorbenzol.

9. Propylenharz-Zusammensetzung für Kraftfahrzeuginnenteile, die 100 Gewichtsteile einer Propylen-Ethylen-Blockcopolymer-Zusammensetzung nach Anspruch 7 und 1 bis 100 Gewichtsteile eines anorganischen Füllstoffes umfaßt.

10. Zusammensetzung für Kraftfahrzeuginnenteile, die ein kristallines Propylenpolymer enthält, die fraktioniert werden kann in (x) einen o-Dichlorbenzol-löslichen Anteil bei 30°C, (y) einen o-Dichlorbenzol-löslichen Anteil bei einer Temperatur von mehr als 30° und nicht mehr als 105°C und (z) einen o-Dichlorbenzol-unlöslichen Anteil bei 105°C durch eine Temperaturanstiegselutionsfraktionierung unter Verwendung von o-Dichlorbenzol, und worin (i) die intrinsische Viskosität [η] (in Decalin bei 135°C) der Komponente (x) im Bereich von 2,0 bis 10 dl/g liegt; (ii) die Relaxationszeit τ der Komponente (z) erhalten aus einer Schmelzviskoelastizitätsmessung im Bereich von 0,01 bis 0,35 Sekunden bei einer Winkelfrequenz ω von 10⁰/sek. liegt; der Molekulargewichtsverteilungsindex (PDI) der Komponente (z), dargestellt durch ω₂/10ω₁ im Bereich von 1 bis 18 liegt, worin ω₁ die Winkel frequenz ist, bei der das Speichermodul (G') erhalten aus der Schmelzviskoelastizitätsmessung 2 x 10² Pa ist, und ω₂ die Winkel frequenz ist, bei der das Speichermodul (G`) 2 x 10⁴ Pa ist; (iii) das Gewichtsverhältnis der Menge der Komponente (y)/[die Menge der Komponente (y) + die Menge der Komponente (z)] im Bereich von 0 bis 0,20 ist; und (iv) das Gewichtsverhältnis der Menge der Komponente (x)/[die Menge der Komponente (x) + die Menge der Komponente (y) + die Menge der Komponente (z)] im Bereich von 0,03 bis 0,35 liegt.

11. Zusammensetzung nach Anspruch 10, die ein kristallines Propylenpolymer enthält, die eine Propylen-Ethylen-Blockcopolymer-Zusammensetzung ist.

12. Zusammensetzung nach Anspruch 10, die ein kristallines Propylenpolymer enthält, die 100 Gewichtsteile eines kristallines Propylenharzes, einer Propylen-Ethylen-Blockcopolymer-Zusammensetzung oder einer Mischung davon und 0,1 bis 50 Gewichtsteile mindestens eines Bestandteils ausgewählt aus thermoplastischen Elastomeren und Polyethylenharzen umfaßt.

13. Propylenharz-Zusammensetzung für Kraftfahrzeuginnenteile, die 100 Gewichtsteile der Zusammensetzung, die ein kristallines Propylenpolymer enthält, nach Anspruch 10 und 1 bis 100 Gewichtsteile eines anorganischen Füllstoffes umfaßt.

14. Kraftfahrzeuginnenteile, erhalten durch Spritzgießen der das kristalline Propylenpolymer enthaltenden Zusammensetzung nach Anspruch 1.

15. Kraftfahrzeuginnenteile, erhalten durch Spritzgießen der Zusammensetzung, die das kristalline Propylenpolymer enthält, nach Anspruch 3.

16. Kraftfahrzeuginnenteil, erhalten durch Spritzgießen der Propylenharz-Zusammensetzung nach Anspruch 4.

17. Kraftfahrzeuginnenteil, erhalten durch Spritzgießen der Propylenharz-Zusammensetzung nach Anspruch 5.

18. Kraftfahrzeuginnenteil, erhalten durch Spritzgießen der Propylenharz-Zusammensetzung nach Anspruch 6.

19. Kraftfahrzeuginnenteil, erhalten durch Spritzgießen der Propylen-Ethylen-Blockcopolymer-Zusammensetzung nach Anspruch 7.

20. Kraftfahrzeuginnenteil, erhalten durch Spritzgießen der Propylenharz-Zusammensetzung nach Anspruch 9.

21. Kraftfahrzeuginnenteil, erhalten durch Spritzgießen der Zusammensetzung, die das kristalline Propylenpolymer enthält, nach Anspruch 10.

22. Kraftfahrzeuginnenteil, erhalten durch Spritzgießen der Propylenharz-Zusammensetzung nach Anspruch 13.

23. Kraftfahrzeuginnenteil, erhalten nach irgend einem der Ansprüche 14 bis 22, bei dem es sich um eine Installationstafel bzw. ein Armaturenbrett, ein Konsolengehäuse oder eine Verzierung handelt.

## Revendications

1. Composition contenant un polymère du propylène cristallin pour des pièces d'intérieur d'automobile dans laquelle (i) un indice de viscosité est dans la plage de 1 à 100 g/10 min, et (ii) une durée de relaxation (τ) obtenue à partir d'une mesure de la viscoélasticité de la masse fondue est de 0,35 seconde ou moins à une fréquence angulaire ω de 10°/s.

2. Composition contenant un polymère de propylène cristallin pour des pièces d'intérieur d'automobile selon la revendication 1, dans laquelle la durée de relaxation (τ) est dans la plage de 0,01 à 0,35 seconde.

3. Composition contenant un polymère de propylène cristallin pour des pièces d'intérieur d'automobile dans laquelle (i) un indice de viscosité est dans la plage de 1 à 100 g/10 min, (ii) une durée de relaxation (τ) obtenue à partir d'une mesure de la viscoélasticité de la masse fondue est dans la plage de 0,01 à 0,35 seconde à une fréquence angulaire ω de 10°/s, et (iii) un indice de distribution de la masse moléculaire (PDI) représenté par ω2/10ω₁ est dans la gamme de 1 à 25 où ω₁ est une fréquence angulaire à laquelle un module de stockage (G') obtenu de la mesure de la viscoélasticité de la masse fondue est de 2x10² Pa, et ω₂ est une fréquence angulaire à laquelle le module de stockage (G') est de 2x10⁴ Pa.

4. Composition de résine de propylène pour des pièces d'intérieur d'automobile qui comprend 100 parties en poids de la composition contenant du polymère de propylène cristallin décrit dans la revendication 1 ou 3 et 0,5 à 50 parties en poids d'au moins un élément choisi parmi les autres résines thermoplastiques et polymères caoutchouteux.

5. Composition de résine de propylène pour des pièces d'intérieur d'automobile qui comprend 100 parties en poids de la composition contenant du polymère de propylène cristallin décrit dans la revendication 1 ou 3 et 1 à 100 parties en poids d'au moins une charge choisie parmi les charges inorganiques et les charges organiques.

6. Composition de résine de propylène pour des pièces d'intérieur d'automobile qui comprend 100 parties en poids de la composition de résine de propylène décrite dans la revendication 4 et 1 à 100 parties en poids d'au moins une charge, parmi les charges inorganiques et les charges organiques.

7. Composition de copolymère séquencé propylène/éthylène pour des pièces d'intérieur d'automobile qui (i) peut être fractionnée en (a) une fraction soluble dans l'o-dichlorobenzène à 30°C et (b) une fraction insoluble dans l'o-dichlorobenzène à 30°C au moyen d'un fractionnement par élution avec élévation de la température en utilisant de l'o-dichlorobenzène et dans laquelle une viscosité intrinsèque [η] (dans de la décaline à 135°C) du composant (a) est dans la plage de 2,0 à 10 dl/g; une durée de relaxation (τ) du composant (b) obtenue à partir d'une mesure de la viscoélasticité de la masse fondue est dans la plage de 0,01 à 0,35 seconde à une fréquence angulaire ω de 10°/s; un indice de distribution des masses moléculaires (PDI) du composant (b) représenté par ω₂/10ω₁ est dans la plage de 1 à 18 où ω₁ est une fréquence angulaire à laquelle un module de stockage (G') obtenu à partir de la mesure de la viscoélasticité de la masse fondue est de 2x10² Pa et ω₂ est une fréquence angulaire à laquelle le module de stockage (G') est de 2x10⁴ Pa; et une fraction de pentade isotactique du composant (b) est de 95% ou plus; et (ii) une teneur en motifs éthylène est dans la plage de 3 à 24% en poids.

8. Composition de copolymère séquencé propylène/éthylène pour des pièces d'intérieur d'automobile selon la revendication 7, dans laquelle la quantité du composant (a) est dans la plage de 3 a 40% en poids et la quantité du composant (b) est dans la plage de 97 à 60% en poids selon un fractionnement par élution avec élévation de la température en utilisant l'o-dichlorobenzène.

9. Composition de résine de propylène pour des pièces d'intérieur d'automobile qui comprend 100 parties en poids d'une composition de copolymère séquencé propylène/éthylène décrite dans la revendication 7 et de 1 à 100 parties en poids d'une charge inorganique.

10. Composition contenant un polymère de propylène cristallin pour des pièces d'intérieur d'automobile qui peut être fractionnée en (x) une fraction soluble dans l'o-dichlorobenzène à 30°C, (y) une fraction soluble dans l'o-dichlorobenzène à une température supérieure à 30°C et ne dépassant pas 105°C et (z) une fraction insoluble dans l'o-dichlorobenzène à 105°C au moyen d'un fractionnement par élution avec élévation de la température en utilisant l'o-dichlorobenzène et dans laquelle (i) une viscosité intrinsèque [η] (dans la décaline à 135°C) du composant (x) est dans la plage de 2,0 à 10 dl/g; (ii) une durée de relaxation (τ) du composant (z) obtenue à partir d'une mesure de la viscoélasticité de la masse fondue est dans la plage de 0,01 à 0,35 seconde à une fréquence angulaire ω de 10°/s; un indice de distribution des masses moléculaires (PDI) du composant (z) représenté par ω₂/10 ω₁ est dans la plage de 1 à 18 où ω₁ est une fréquence angulaire à laquelle un module de stockage (G') obtenu à partir de la mesure de la viscoélasticité de la masse fondue est de 2x10² Pa et ω₂ est une fréquence angulaire à laquelle le module de stockage (G') est de 2x10⁴ Pa; (iii) un rapport pondéral de la quantité du composant (y)/[la quantité du composant (y) + la quantité du composant (z)] est dans la plage de 0 à 0,20; et (iv) un rapport pondéral de la quantité du composant (x)/[la quantité du composant (x) + la quantité du composant (y) + la quantité du composant (z)] est dans la plage de 0,03 à 0,35.

11. Composition contenant un polymère de propylène cristallin selon la revendication 10, qui est une composition de copolymère séquencé propylène/éthylène.

12. Composition contenant un polymère de propylène cristallin selon la revendication 10, qui comprend 100 parties en poids d'une résine de propylène cristallin, une composition de copolymère séquencé propylène/éthylène ou un mélange de ceux-ci et 0,1 à 50 parties en poids d'au moins un élément choisi parmi les élastomères thermoplastiques et les résines polyéthylène.

13. Composition de résine de propylène pour pièces d'intérieur d'automobile qui comprend 100 parties en poids de la composition contenant un polymère de propylène cristallin décrite dans la revendication 10 et 1 à 100 parties en poids d'une charge inorganique.

14. Pièce d'intérieur d'automobile obtenue au moyen d'un moulage par injection de la composition contenant un polymère de propylène cristallin décrite dans la revendication 1.

15. Pièce d'intérieur d'automobile obtenue au moyen d'un moulage par injection de la composition contenant un polymère de propylène cristallin décrite dans la revendication 3.

16. Pièce d'intérieur d'automobile obtenue au moyen d'un moulage par injection de la composition de résine de propylène décrite dans la revendication 4.

17. Pièce d'intérieur d'automobile obtenue au moyen d'un moulage par injection de la composition de résine de propylène décrite dans la revendication 5.

18. Pièce d'intérieur d'automobile obtenue au moyen d'un moulage par injection de la composition de résine de propylène décrite dans la revendication 6.

19. Pièce d'intérieur d'automobile obtenue au moyen d'un moulage par injection de la composition de copolymère séquencé propylène/éthylène décrite dans la revendication 7.

20. Pièce d'intérieur d'automobile obtenue au moyen d'un moulage par injection de la composition de résine de propylène décrite dans la revendication 9.

21. Pièce d'intérieur d'automobile obtenue au moyen d'un moulage par injection de la composition contenant un polymère de propylène cristallin décrite dans la revendication 10.

22. Pièce d'intérieur d'automobile obtenue au moyen d'un moulage par injection de la composition de résine de propylène décrite dans la revendication 13.

23. Pièce d'intérieur d'automobile selon l'une quelconque des revendications 14 à 22, qui constitue une planche de bord, un boîtier d'instruments ou une garniture.
